# EUROPÄISCHE PATENTANMELDUNG

(11) **EP 4 417 454 A1**
(43) Veröffentlichungstag der Anmeldung: **21.08.2024**
(21) Anmeldenummer: 23220260.6
(22) Anmeldetag: 27.12.2023
(51) Int. Cl.: B60K 15/05, B60K 1/00

(54) **BETÄTIGUNGSMECHANISMUS ZUM BETÄTIGEN EINER ABDECKUNG ODER KLAPPE EINES FAHRZEUGS**

(30) Priorität: 14.02.2023 DE 102023103576
(71) Anmelder: Illinois Tool Works Inc., Glenview IL 60025 (US)
(72) Erfinder: OCH, Roland, Glenview, Illinois, 60025 (US); HEGWEIN, Matthias, Glenview, Illinois, 60025 (US); KOZEL, Lubomír, Glenview, Illinois, 60025 (US)
(74) Vertreter: Meissner Bolte Partnerschaft mbB

(57) **Zusammenfassung**

Die Erfindung betrifft einen Betätigungsmechanismus (1) zum Betätigen einer Abdeckung oder Klappe (2) eines Fahrzeugs, wobei die Abdeckung oder Klappe (2) insbesondere manuell reversibel zwischen einer Schließstellung, in welcher die Abdeckung oder Klappe (2) strakbündig mit einer Fahrzeugaußenhaut (3) angeordnet ist, und einer Offenstellung bewegbar ist, in welcher die Abdeckung oder Klappe (2) zumindest teil- oder bereichsweise hinter der Fahrzeugaußenhaut (3) angeordnet ist, wobei der Betätigungsmechanismus (1) einen mit der Abdeckung oder Klappe (2) wirkverbundenen Bewegungsmechanismus (3) aufweist, welcher ausgebildet ist, beim Überführen der Abdeckung oder Klappe (2) von ihrer Schließstellung in ihre Offenstellung die Abdeckung oder Klappe (2) zunächst in eine Zwischenstellung zu überführen, in welcher sich die Abdeckung oder Klappe (2) zumindest teil- oder bereichsweise hinter der Fahrzeugkarosserie und insbesondere Fahrzeugaußenhaut (3) befindet, und die Abdeckung oder Klappe (2) dann in einer zumindest im Wesentlichen und vorzugsweise reinrotatorischen Bewegung in ihre Offenstellung zu überführen. Erfindungsgemäß ist insbesondere vorgesehen, dass der Betätigungsmechanismus (1) ferner einen Federmechanismus aufweist, welcher dem Gelenkmechanismus (3) zugeordnet oder Teil des Gelenkmechanismus (3) ist, wobei der Federmechanismus ausgebildet ist, beim Überführen der Abdeckung oder Klappe (2) von ihrer Schließstellung in ihre Offenstellung oder beim Überführen der Abdeckung oder Klappe (2) von ihrer Offenstellung in ihre Schließstellung eine Kraftkomponente auf den Gelenkmechanismus (3) auszuüben, welche die Überführung der Abdeckung oder Klappe (2) in ihre Offenstellung bzw. Schließstellung zumindest unterstützt.

## Beschreibung

Die vorliegende Erfindung betrifft einen Betätigungsmechanismus zum Betätigen einer Abdeckung oder Klappe eines Fahrzeugs, insbesondere einer Abdeckung oder Klappe in Gestalt einer Lade-, Service- oder Tankklappe eines Fahrzeugs oder in Gestalt einer Abdeckung oder Klappe zur Sensor- und insbesondere LIDAR-System-Abdeckung eines Fahrzeugs.

Gemäß einem weiteren Aspekt der vorliegenden Erfindung betrifft diese eine Anordnung, insbesondere eine Sensor-, vorzugsweise LIDAR-System-Anordnung, oder eine Lade-, Service- oder Tankanordnung für Fahrzeuge, wobei die Anordnung unter anderem den erfindungsgemäßen Betätigungsmechanismus aufweist.

Ferner betrifft die Erfindung ein Fahrzeug mit einer entsprechenden Sensor-, insbesondere LIDAR-System-Anordnung, oder mit einer Lade-, Service- oder Tankanordnung.

Bewegliche Abdeckungen finden an verschiedenen Stellen im Fahrzeug Verwendung. Grundsätzlich dienen diese dazu, eine zu verdeckende Öffnung oder zu verdeckende Fläche in oder an einem Fahrzeug zu verdecken bzw. abzudecken. Insbesondere werden derartige Abdeckungen beispielsweise für Tank-, Lade-, Wasser- oder sonstige Serviceklappen verwendet. Beispielsweise verdecken Tank- bzw. Ladeklappen eine Tankmulde (oder Lademulde), die zum Betanken eines Fahrzeugs mit Kraftstoff oder beispielsweise einer Harnstofflösung bzw. zum Aufladen der Batterie eines Elektro- oder Hybridfahrzeugs dient.

Weiterhin verdecken entsprechende Abdeckungen Sensor-Systeme von Fahrzeugen, insbesondere LIDAR-Systeme.

Fahrzeuge mit modernen Assistenzsystemen umfassen oftmals LIDAR-Sensoren, welche beispielsweise dazu dienen, Objekte in der Umgebung des Fahrzeugs zu detektieren. Dazu werden von dem LIDAR-Sensor einzelne Lichtimpulse oder Laserstrahlen in die Umgebung ausgesendet. Üblicherweise senden LIDAR-Sensoren für automobile Anwendungen Laserstrahlen in einem für das menschliche Auge nicht sichtbaren Wellenlängenbereich aus. Dabei handelt es sich meist um Infrarotstrahlung mit einer Wellenlänge von 800 nm bis 2500 nm. Wird der einzelne Laserstrahl von einem Objekt in der Umgebung, beispielsweise einem Fahrzeug, zum LIDAR-Sensor zurückreflektiert, so kann anhand der Laufzeit des einzelnen Laserstrahls auf die Entfernung zwischen dem LIDAR-Sensor und dem Objekt geschlossen werden.

Um die Lichtimpulse oder Laserstrahlen in unterschiedliche Richtungen auszusenden, zu empfangen und zu einem Detektor zu führen, sind im Zusammenhang mit LIDAR-Sensoren gemäß dem Stand der Technik verschiedene Spiegelsysteme bekannt. Mit derartigen Spiegelsystemen kann der Lichtimpuls oder Laserstrahl in eine bestimmte Richtung der Umgebung gelenkt werden. Die Umgebung wird so mit mehreren tausend Lichtimpulsen oder Laserstrahlen abgetastet. Dazu ist es nötig, dass die Spiegelsysteme zum Empfangen der zum LIDAR-Sensor zurückreflektierten Laserstrahlen genau in Senderichtung ausgerichtet sind.

Aufgrund der notwendigen Präzision einer LIDAR-Sensor-Anordnung handelt es sich bei dieser Anordnung um eine konstruktiv aufwendige und kostspielige Einheit, so dass im abgestellten Zustand des Fahrzeugs die LIDAR-Anordnung möglichst geschützt und von außen nicht zugänglich aufbewahrt werden soll. Darüber hinaus soll die LIDAR-Anordnung im abgestellten Zustand des Fahrzeugs von äu-ßeren Einwirkungen oder der Temperatur, Luftfeuchtigkeit oder dergleichen geschützt sein. So ist es erstrebenswert, die LIDAR-Sensorik in einer Sensor-Mulde aufzunehmen, welche mit einer Abdeckung geschützt werden kann.

Derartige Abdeckungen sind oftmals mit einem Scharnierarm eines Betätigungsmechanismus verbunden, der die entsprechende Klappe zwischen einer die Öffnung freigebenden Öffnungsstellung und einer die Öffnung verschließenden Schließstellung verschwenkbar ausbildet.

Bekannte Betätigungsmechanismen können dazu ausgebildet sein, die Abdeckungen auf verschiedene Weise zwischen der Schließstellung und der Offenstellung zu bewegen. So sind insbesondere Betätigungsmechanismen bekannt, welche die Abdeckung nach außen schwenken.

Nachteilig an solchen Betätigungsmechanismen ist neben einem häufig geringen Benutzerkomfort beim Abdecken und Freigeben insbesondere der relativ hohe Platzbedarf, beispielsweise von Elektrofahrzeugen bei einem Ladevorgang. Der hohe Platzbedarf ergibt sich daraus, dass die Abdeckungen beim Freigeben von Ladeanschlüssen in der Regel nach außen verschwenkt werden und in einem geöffneten Zustand häufig in einem 90°-Winkel vom Fahrzeug abstehen.

Die vom Fahrzeug abstehenden Abdeckungen stellen insbesondere für Fußgänger ein teilweise schwer erkennbares Hindernis dar, mit dem sie kollidieren können. Hierbei kann es nicht nur zu Personenschäden, sondern auch zu Schäden an der Abdeckung selber kommen. Zudem werden die vom Fahrzeug abstehenden Abdeckungen häufig Opfer von Vandalismus, da die Abdeckungen aufgrund ihres ungünstigen Winkels leicht von einem Fahrzeug abgeknickt werden können.

Darüber hinaus erhöhen abstehende Abdeckungen den Luftwiderstand des Fahrzeugs bei der Fahrt des Fahrzeugs, wenn die Abdeckungen beispielsweise im Zusammenhang mit einem LIDAR-Sensorsystem zum Einsatz kommen.

Insofern sind Betätigungsmechanismen bevorzugt, welche ausgebildet sind, die Abdeckung hinter die Fahrzeugaußenhaut zu bewegen und somit die Öffnung freigeben.

Beispielsweise ist in diesem Zusammenhang aus der Druckschrift DE 20 2021 001 685 U1 ein Mechanismus bekannt, mit welchem eine Abdeckung ausgehend von einer Schließstellung diese zunächst in einer linearen Bewegung hinter die Fahrzeugkarosserie gezogen wird, wobei anschließend die Abdeckung in die Offenstellung hinter die Fahrzeugkarosserie verschwenkt wird. Für den Betätigungsmechanismus kommt ein Zahnradgetriebe mit einer Zahnstange zum Einsatz.

Die aus dem Stand der Technik bekannten Betätigungsmechanismen zum Betätigen einer Abdeckung oder Klappe eines Fahrzeugs, wie beispielsweise der aus der Druckschrift DE 20 2021 001 685 U1 bekannte Betätigungsmechanismus, weisen in der Regel einen elektromotorischen Antrieb auf, mit welchem die Abdeckung oder Klappe von der Schließstellung in die Offenstellung (und umgekehrt) bewegbar sind. Hierbei ist der insbesondere elektromagnetische Antrieb mit dem zugehörigen Gelenkmechanismus der Abdeckung oder Klappe entsprechend wirkverbunden.

Der Nachteil von solchen Ansätzen ist darin zu sehen, dass elektromotorische Antriebe in der Regel über ein Getriebe mit dem Gelenkmechanismus wirkverbunden sind.

Hierbei handelt es sich in der Regel um selbsthemmende Getriebe. "Selbsthemmung" bedeutet, dass sich die Antriebswelle des Getriebes beim Anlegen eines Drehmoments nicht mehr dreht und somit blockiert ist. Durch die Selbsthemmung kann die Abdeckung oder Klappe nicht mehr bedarfsweise manuell betätigt werden, um diese beispielsweise bei einem Ausfall der elektrischen Versorgung für den elektromotorischen Antrieb oder bei einer Störung des elektromotorischen Antriebs manuell von der Schließstellung in die Offenstellung und umgekehrt zu überführen.

Insbesondere sind die dem elektromotorischen Antrieb zugeordneten Getriebe, welche in der Regel zwischen dem elektromotorischen Antrieb einerseits und dem Gelenkmechanismus der Abdeckung oder Klappe angeordnet sind, nicht rückdrehbar ausgeführt. Dies birgt die Gefahr, dass bei einem Ausfall oder einer Störung des elektromotorischen Antriebs oder einer dem elektromotorischen Antrieb zugeordneten Steuereinrichtung die Abdeckung oder Klappe auch nicht mehr von ihrer Offenstellung manuell in die Schließstellung überführt werden kann.

Selbst wenn ein dem elektromotorischen Antrieb zugeordnete Getriebe, welches die Antriebswelle des elektromotorischen Antriebs mit dem Gelenkmechanismus wirkverbindet, nicht als selbsthemmendes Getriebe und/oder als ein Getriebe ausgeführt ist, welches rückdrehbar ist, ist in der Regel nicht zu vermeiden, dass aufgrund eines Aktuatorspiels, welches sich über die Zeit einstellen kann, oder welches auch abhängig von der Umgebungstemperatur variiert, die Abdeckung oder Klappe nicht reproduzierbar in die Offenstellung oder Schließstellung überführbar ist.

Auf Grundlage dieser Problemstellungen liegt somit der Erfindung die Aufgabe zu Grunde, einen Betätigungsmechanismus zum Betätigen einer Abdeckung oder Klappe eines Fahrzeugs anzugeben, wobei der Betätigungsmechanismus bei einer einfachen Bauart ein komplexes Bewegungsmuster der Abdeckung oder Klappe ermöglicht.

Insbesondere soll mit dem Betätigungsmechanismus in reproduzierbarer Weise ein Bewegungsmuster der Abdeckung oder Klappe ermöglicht werden. Darüber hinaus sollte der dem Betätigungsmechanismus zugeordnete Verschwenkmechanismus möglichst verschleißarm auch im Nassbereich arbeiten.

Die der Erfindung zu Grunde liegende Aufgabe wird insbesondere durch den Gegenstand des unabhängigen Patentanspruchs 1 gelöst, wobei vorteilhafte Weiterbildungen des erfindungsgemäßen Betätigungsmechanismus in den abhängigen Patentansprüchen 2 bis 14 angegeben sind.

Demgemäß betrifft die Erfindung insbesondere einen Betätigungsmechanismus zum Betätigen einer Abdeckung oder Klappe eines Fahrzeugs, wobei die Abdeckung oder Klappe insbesondere manuell reversibel zwischen einer Schließstellung, in welcher die Abdeckung oder Klappe insbesondere bündig und vorzugsweise strakbündig mit einer Fahrzeugkarosserie und insbesondere Fahrzeugaußenhaut angeordnet ist, und einer Offenstellung bewegbar ist, in welcher die Abdeckung oder Klappe zumindest teil- oder bereichsweise hinter der Fahrzeugkarosserie und insbesondere Fahrzeugaußenhaut angeordnet ist.

Bei der Abdeckung oder Klappe handelt es sich insbesondere um eine Abdeckung oder Klappe in Gestalt einer Lade-, Service- oder Tankklappe eines Fahrzeugs oder in Gestalt einer Abdeckung oder Klappe zur Sensor- und insbesondere LIDAR-System-Abdeckung eines Fahrzeugs.

Der erfindungsgemäße Betätigungsmechanismus weist einen insbesondere mit der Rückseite der Abdeckung oder Klappe wirkverbundenen Bewegungsmechanismus auf, welcher insbesondere in Gestalt eines Gelenkmechanismus oder in Gestalt eines Führungsmechanismus insbesondere Kurvenscheibenführungsmechanismus ausgeführt und ausgebildet ist, beim Überführen der Abdeckung oder Klappe von ihrer Schließstellung in ihre Offenstellung die Abdeckung oder Klappe zunächst in eine Zwischenstellung zu überführen, in welcher sich die Abdeckung oder Klappe zumindest teil- oder bereichsweise hinter der Fahrzeugkarosserie und insbesondere Fahrzeugaußenhaut befindet, und die Abdeckung oder Klappe dann in einer zumindest im Wesentlichen und vorzugsweise rein-rotatorischen Bewegung in ihre Offenstellung zu überführen.

Demgemäß handelt es sich bei dem erfindungsgemäßen Betätigungsmechanismus um einen Betätigungsmechanismus, welcher in der Lage ist, eine Abdeckung oder Klappe zwischen einer Offenstellung und einer Schließstellung und umgekehrt zu bewegen, wobei der Betätigungsmechanismus, insbesondere automatisch eine Öffnung in einer Fahrzeugkontur, beispielsweise einer Fahrzeugkarosserie, freilegen oder verschließen zu können, wobei innerhalb der Öffnung in der Fahrzeugkontur insbesondere eine Schnittstelle vorgesehen sein kann, welche mit Bezug zur Fahrzeugkontur in Richtung Fahrzeuginneres zurückgesetzt und ortsfest fixiert am Fahrzeug angeordnet ist.

Der erfindungsgemäße Betätigungsmechanismus zeichnet sich insbesondere dadurch aus, dass dieser ferner einen Federmechanismus aufweist, welcher dem Bewegungsmechanismus zugeordnet oder Teil des Bewegungsmechanismus ist.

Gemäß einer ersten Option ist der Federmechanismus ausgebildet, beim Überführen der Abdeckung oder Klappe von ihrer Schließstellung in ihre Offenstellung und insbesondere beim Überführen der Abdeckung oder Klappe von ihrer Zwischenstellung in ihre Offenstellung eine erste Kraftkomponente auf den Bewegungsmechanismus auszuüben, welche die Überführung der Abdeckung oder Klappe in ihre Offenstellung zumindest unterstützt.

Gemäß einer alternativen zweiten Option ist der Federmechanismus ausgebildet, beim Überführen der Abdeckung oder Klappe von ihrer Offenstellungstellung in ihre Schließstellung und insbesondere beim Überführen der Abdeckung oder Klappe von ihrer Zwischenstellung in ihre Schließstellungstellung eine erste Kraftkomponente auf den Bewegungsmechanismus auszuüben, welche die Überführung der Abdeckung oder Klappe in ihre Schließstellung zumindest unterstützt.

Durch das Vorsehen eines solchen Federmechanismus wird in einer einfach zu realisierenden aber dennoch effektiven Weise die Ausfall-, Funktions- und Betriebssicherheit des Betätigungsmechanismus erhöht.

Sollte der Betätigungsmechanismus ferner mit einem elektromotorischen Aktuator versehen sein, welcher mit dem Bewegungsmechanismus wirkverbunden ist, so dass die Abdeckung oder Klappe elektromotorisch von der Schließstellung in die Offenstellung (und umgekehrt) überführbar ist, dient der Federmechanismus als Redundanz.

Darüber hinaus bietet der Federmechanismus den weiteren Vorteil, dass von einem ggf. vorgesehenen elektromotorischen Antrieb ein deutlich niedrigeres Drehmoment oder Kraftmoment bereitgestellt werden muss, um die Abdeckung oder Klappe von ihrer Schließstellung in ihre Offenstellung oder umgekehrt von ihrer Offenstellung in ihre Schließstellung zu überführen, da der Federmechanismus eine Vorspannkraft (erste Kraftkomponente) bereitstellt, die auf den Bewegungsmechanismus ausgeübt wird, um die Überführung der Abdeckung oder Klappe in ihre Offenstellung bzw. in ihre Schließstellung zumindest zu unterstützen.

Ein ggf. vorgesehene elektromotorische Antrieb kann somit kleiner ausgeführt werden, was signifikante Vorteile im Hinblick auf den in der Regel nur begrenzt zur Verfügung stehenden Bauraum hat.

Auch ist durch das Vorsehen des Federmechanismus wirkungsvoll sichergestellt, dass trotz eines relativ kleinen elektromotorischen Antriebs beim Überführen der Abdeckung oder Klappe von ihrer Schließstellung in die Offenstellung oder von ihrer Offenstellung in die Schließstellung ein relativ großes Kraftmoment ausübbar ist, infolgedessen sicher eine ggf. vorhandene Vereisung gelöst werden kann, ohne dass hierzu der insbesondere elektromotorische Aktuator entsprechend überdimensioniert ausgeführt sein muss.

Die Erfindung ist jedoch nicht auf Ausführungsformen beschränkt, bei welchen dem Betätigungsmechanismus ein elektromotorischer Antrieb zugeordnet ist.

Denkbar sind auch Ausführungsvarianten, bei welchen kein Aktuator, insbesondere elektromotorischer Aktuator zum Einsatz kommt, und bei welchen die Abdeckung oder Klappe manuell von der Schließstellung in die Offenstellung (und umgekehrt) überführbar ist.

Wenn dennoch ein insbesondere elektromotorisch ausgeführter Aktuator zum bedarfsweisen Betätigen der Abdeckung oder Klappe zum Einsatz kommt, bietet der Federmechanismus den zusätzlichen Vorteil, dass ein ggf. vorhandenes Aktuatorspiel keine Auswirkung mehr auf eine reproduzierbare Stellung der Abdeckung oder Klappe zumindest in ihrer Offenstellung oder Schließstellung hat, da aufgrund der von dem Federmechanismus auf die Abdeckung oder Klappe ausgeübten Vorspannkraft diese trotz eines ggf. vorhandenen Aktuatorspiels stets in die Sollstellung gedrückt wird, wenn sich die Abdeckung oder Klappe in ihrer Offenstellung oder Schließstellung befindet.

Gemäß bevorzugten Realisierungen des erfindungsgemäßen Betätigungsmechanismus ist vorgesehen, dass der Federmechanismus ausgebildet ist, beim Überführen der Abdeckung oder Klappe von ihrer Schließstellung in ihre Offenstellung und insbesondere beim Überführen der Abdeckung oder Klappe von ihrer Zwischenstellung in ihre Offenstellung eine erste Kraftkomponente auf den Bewegungsmechanismus auszuüben, welche die Überführung der Abdeckung oder Klappe in ihrer Offenstellung zumindest soweit unterstützt, bis sich die Abdeckung oder Klappe in einer Totpunktstellung zwischen der Zwischenstellung und der Offenstellung befindet, wobei die Totpunktstellung der Abdeckung oder Klappe insbesondere eine bistabile Stellung der Abdeckung oder Klappe darstellt.

Alternativ hierzu ist vorgesehen, dass der Federmechanismus ausgebildet ist, beim Überführen der Abdeckung oder Klappe von ihrer Offenstellungstellung in ihre Schließstellung und insbesondere beim Überführen der Abdeckung oder Klappe von ihrer Zwischenstellung in ihre Schließstellungstellung eine erste Kraftkomponente auf den Bewegungsmechanismus auszuüben, welche die Überführung der Abdeckung oder Klappe in ihre Schließstellung soweit zumindest unterstützt, bis sich die Abdeckung oder Klappe in einer Totpunktstellung zwischen der Offenstellung und der Schließstellung befindet, wobei die Totpunktstellung der Abdeckung oder Klappe insbesondere eine bistabile Stellung der Abdeckung oder Klappe darstellt.

Die Totpunktstellung der Abdeckung oder Klappe bezeichnet eine insbesondere bistabile Stellung der Abdeckung oder Klappe, bei welcher die verbindenden Hebel und/oder Gelenke des Bewegungsmechanismus des Betätigungsmechanismus und die einwirkenden Kraftvektoren, insbesondere die von dem Federmechanismus ausgeübten, einwirkenden Kraftvektoren auf einer gemeinsamen Gerade liegen.

In einer besonders einfach zu realisierenden Ausführungsvariante des zuletzt genannten Aspekts ist vorgesehen, dass der Federmechanismus als Totpunktfeder- und insbesondere Übertotpunktfeder-Hebelmechanismus ausgeführt ist oder Teil eines Totpunktfeder- und insbesondere Übertotpunktfeder-Hebelmechanismus ist, wobei der Totpunktfeder- und insbesondere Übertotpunktfeder-Hebelmechanismus ausgebildet ist, nach Überwindung der Totpunktstellung der Abdeckung oder Klappe in Richtung Offenstellung der Abdeckung oder Klappe eine zweite Kraftkomponente auf den Bewegungsmechanismus auszuüben, welche die Überführung der Abdeckung oder Klappe von der Totpunktstellung in die Offenstellung zumindest unterstützt.

Alternativ hierzu ist vorgesehen, dass der Federmechanismus als Totpunktfeder- und insbesondere Übertotpunktfeder-Hebelmechanismus ausgeführt ist oder Teil eines Totpunktfeder- und insbesondere Übertotpunktfeder-Hebelmechanismus ist, wobei der Totpunktfeder- und insbesondere Übertotpunktfeder-Hebelmechanismus ausgebildet ist, nach Überwindung der Totpunktstellung in Richtung Schließstellung der Abdeckung oder Klappe eine zweite Kraftkomponente auf den Bewegungsmechanismus auszuüben, welche die Überführung der Abdeckung oder Klappe von der Totpunktstellung in die Schließstellung zumindest unterstützt.

Mit anderen Worten, bei diesen Ausführungsvarianten ist vorgesehen, dass die Abdeckung oder Klappe - ausgehend von ihrer Schließstellung - zunächst in die bereits genannte Zwischenstellung überführt wird. Anschließend wird die Abdeckung oder Klappe insbesondere durch das Einwirken der ersten Kraftkomponente des Federmechanismus auf den Bewegungsmechanismus in die Totpunktstellung überführt.

Alternativ hierzu ist vorgesehen, dass die Abdeckung oder Klappe - ausgehend von ihrer Offenstellung insbesondere durch das Einwirken der ersten Kraftkomponente des Federmechanismus auf den Bewegungsmechanismus in die Totpunktstellung überführt.

Ohne äußere Einwirkungen auf die Abdeckung oder Klappe in der Totpunktstellung verbleibt diese dort. Erst durch Einwirken einer weiteren Kraftkomponente ändert sich dieser Zustand. Wenn es sich bei dieser weiteren Kraftkomponente um eine in Richtung Offenstellung der Abdeckung oder Klappe wirkende (zweite) Kraftkomponente handelt, wird die Abdeckung oder Klappe von der Totpunktstellung in die Offenstellung unter zumindest gleichzeitiger Unterstützung durch den Federmechanismus überführt.

So ist es grundsätzlich denkbar, dass der Federmechanismus mindestens eine Totpunkt- und insbesondere Übertotpunktfeder aufweist, welche an einem Hebel oder an einem Hebelbereich des Bewegungsmechanismus einerseits und an einem hinsichtlich des Hebels oder des Hebelbereichs des Bewegungsmechanismus ortsfesten Punkt andererseits angebracht ist. Der Hebel oder Hebelbereich des Bewegungsmechanismus ist dabei um einen Drehpunkt drehbar gelagert, wobei vorzugsweise die mindestens eine Totpunkt- und insbesondere Übertotpunktfeder in insbesondere leicht versetzter Stellung zu dem Drehpunkt des Hebels oder Hebelbereichs an dem Hebel oder Hebelbereich angebracht ist. Vorzugsweise ist bei dieser Ausführungsvariante die mindestens eine Totpunkt- und insbesondere Übertotpunktfeder als Druckfeder ausgeführt.

Gemäß Ausführungsformen des erfindungsgemäßen Betätigungsmechanismus ist dieser derart ausgebildet, dass durch insbesondere manuelle Kraftausübung auf die Abdeckung oder Klappe die Abdeckung oder Klappe von ihrer Offenstellung in ihre Zwischenstellung oder umgekehrt überführbar ist.

Hierbei bietet es sich gemäß einer Ausführungsvariante an, dass der Federmechanismus ausgebildet ist, zumindest dann die Abdeckung oder Klappe vorzugsweise selbsttätig in ihre Totpunktstellung zu überführen und anschließend und insbesondere nach Überwindung der Totpunktstellung durch weitere manuelle Kraftausübung auf die Abdeckung oder Klappe, die Abdeckung oder Klappe vorzugsweise selbsttätig in ihre Schließstellung zu überführen.

Gleiches gilt im umgekehrten Fall, bei welchem der Federmechanismus ausgebildet ist, zumindest dann die Abdeckung oder Klappe vorzugsweise selbsttätig in ihre Totpunktstellung zu überführen und anschließend und insbesondere nach Überwindung der Totpunktstellung durch weitere manuelle Kraftausübung auf die Abdeckung oder Klappe, die Abdeckung oder Klappe vorzugsweise selbsttätig in ihre Offenstellung zu überführen.

Bei Ausführungsvarianten, bei denen die Abdeckung oder Klappe manuell von der Offenstellung in die Schließstellung (und/oder umgekehrt) überführbar ist, sollte vorzugsweise die Abdeckung oder Klappe einen insbesondere an der Rückseite der Abdeckung oder Klappe angeordneten und insbesondere manuell betätigbaren oder ergreifbaren Betätigungsbereich aufweisen, welcher derart ausgebildet ist, dass der Betätigungsbereich in der Offenstellung der Abdeckung oder Klappe insbesondere manuell derart betätigbar oder greifbar ist, dass insbesondere in Richtung einer von dem Federmechanismus auf den Bewegungsmechanismus und/ oder auf die Abdeckung oder Klappe ausgeübten Vorspannkraft die Abdeckung oder Klappe von ihrer Offenstellung in ihre Totpunktstellung der Abdeckung oder Klappe und/oder in die Zwischenstellung der Abdeckung oder Klappe überführbar ist.

Alternativ hierzu weist die Abdeckung oder Klappe einen insbesondere an der Rückseite der Abdeckung oder Klappe angeordneten und insbesondere manuell betätigbaren oder ergreifbaren Betätigungsbereich auf, welcher derart ausgebildet ist, dass der Betätigungsbereich in der Offenstellung der Abdeckung oder Klappe insbesondere manuell derart betätigbar oder greifbar ist, dass insbesondere entgegen einer von dem Federmechanismus auf den Bewegungsmechanismus und/oder auf die Abdeckung oder Klappe ausgeübten Vorspannkraft die Abdeckung oder Klappe von ihrer Offenstellung in ihre Totpunktstellung der Abdeckung oder Klappe und/oder in die Zwischenstellung der Abdeckung oder Klappe überführbar ist.

Im Hinblick auf den Bewegungsmechanismus des erfindungsgemäßen Betätigungsmechanismus kommen unterschiedliche Ausführungsvarianten in Frage.

Gemäß einer Ausführungsvariante ist der insbesondere mit der Rückseite der Abdeckung oder Klappe wirkverbundene Bewegungsmechanismus ausgebildet, beim Überführen der Abdeckung oder Klappe von ihrer Schließstellung in ihre Offenstellung die Abdeckung oder Klappe zunächst in einer Linearbewegung und insbesondere in einer reinen Linearbewegung in die Zwischenstellung zu überführen, und dann die Abdeckung oder Klappe in einer zumindest im Wesentlichen und vorzugsweise rein-rotatorischen Bewegung in die Offenstellung zu überführen.

Hier kann beispielsweise ein Gelenk- oder Betätigungsmechanismus zum Einsatz kommen, wie er - zumindest dem Prinzip nach - aus der Druckschrift DE 20 2021 001 685 U1 bekannt ist. Mit anderen Worten, um die Abdeckung oder Klappe von ihrer Schließstellung über die Zwischenstellung in die Offenstellung zu überführen, kann ein mit der Rückseite der Abdeckung oder Klappe wirkverbundener Bewegungsmechanismus zum Einsatz kommen, welcher ein Zahnradgetriebe mit einer Zahnstange aufweist.

Alternativ zu einem solchen Bewegungsmechanismus bestehend aus einem Zahnradgetriebe mit einer entsprechenden Zahnstange kann der insbesondere mit der Rückseite der Abdeckung oder Klappe wirkverbundene Bewegungsmechanismus einen Führungsmechanismus aufweisen, welcher ausgebildet ist, beim Überführen der Abdeckung oder Klappe von ihrer Schließstellung in ihre Zwischenstellung eine entsprechende Linearbewegung der Abdeckung oder Klappe relativ zu der Fahrzeugkarosserie und insbesondere relativ zu der Fahrzeugaußenhaut zu realisieren, und welcher ferner ausgebildet ist, beim Überführen der Abdeckung oder Klappe von ihrer Zwischenstellung in ihre Offenstellung eine zumindest im Wesentlichen und vorzugsweise rein-rotatorische Bewegung der Abdeckung oder Klappe relativ zu der Fahrzeugkarosserie und insbesondere relativ zu der Fahrzeugaußenhaut zu realisieren.

Als Führungsmechanismus bietet sich insbesondere ein Kulissenführungsmechanismus und/oder ein Kurvenscheibenmechanismus an.

Gemäß einer Ausführungsform des Bewegungsmechanismus weist dieser mindestens einen Hebelarm auf, welcher mit der Abdeckung oder Klappe insbesondere rückseitig verbunden oder verbindbar und dazu ausgebildet ist, bei Betätigung eines dem Betätigungsmechanismus zugeordneten Antriebs, insbesondere elektromotorischen Antriebs, eine Drehbewegung von der Antriebswelle abzugreifen und diese in eine Bewegung, insbesondere in eine Verschiebung und Verschwenkung, der Abdeckung umzuwandeln.

Hierzu kann der mindestens eine Hebelarm eine Antriebsfläche aufweisen, welche derart mit der Antriebswelle des insbesondere elektromotorischen Antriebs in Verbindung steht, dass eine Rotation der Antriebswelle über die Antriebsfläche auf den mindestens einen Hebelarm übertragen wird, wobei die Antriebsfläche einen ersten Bereich aufweist, welcher derart ausgebildet ist, dass eine Rotation der Antriebswelle den Hebelarm in einer ersten Richtung bewegt, wenn der Hebelarm über den ersten Bereich mit der Antriebswelle in Verbindung steht, und wobei die Antriebsfläche einen zweiten Bereich aufweist, welcher derart ausgebildet ist, dass eine Rotation der Antriebswelle den Hebelarm in einer zweiten Richtung bewegt, wenn der Hebelarm über den zweiten Bereich mit der Antriebswelle in Verbindung steht.

Dabei bietet es sich insbesondere an, dass der erste Bereich der Antriebsfläche des mindestens einen Hebelarms im Wesentlichen linear ist bzw. im Wesentlichen gradlinig verläuft, wobei der zweite Bereich der Antriebsfläche des mindestens einen Hebelarms kurvenförmig, insbesondere bogenförmig ausgeführt ist.

Der erste Bereich der Antriebsfläche des mindestens einen Hebelarms sollte vorzugsweise unmittelbar angrenzend an dem zweiten Bereich der Antriebsfläche des mindestens einen Hebelarms ausgeführt sein.

Denkbar in diesem Zusammenhang ist es beispielsweise auch, dass die Antriebsfläche des mindestens einen Hebelarms als Zahnstange ausgebildet ist, welche mit einem durch die Antriebswelle angetriebenen Zahnrad in Wirkverbindung steht.

Alternativ oder zusätzlich hierzu ist es denkbar, dass der Hebelarm eine Führungsnut aufweist, welche dazu ausgebildet ist, die Bewegung des Hebelarms in der ersten Richtung und der zweiten Richtung zu führen. Insbesondere kann in diesem Zusammenhang vorgesehen sein, dass die Führungsnut als Langloch ausgebildet ist, welches sich parallel zum ersten Bereich der Antriebsfläche erstreckt.

Alternativ oder zusätzlich hierzu ist es denkbar, dass der mindestens eine Hebelarm um eine Schwenkachse verschwenkbar gelagert ist, wobei sich die Schwenkachse in die Führungsnut erstreckt.

In vorteilhafter Weise weist der mindestens eine Hebelarm einen Endanschlag auf, welcher neben dem bogenförmigen Bereich, insbesondere auf einer dem linearen Bereich gegenüberliegenden Seite des Hebelarms angeordnet ist.

Alternativ zu den zuvor genannten Ausführungsvarianten des dem Betätigungsmechanismus zugeordneten Bewegungsmechanismus ist es denkbar, dass der insbesondere mit der Rückseite der Abdeckung oder Klappe wirkverbundene Bewegungsmechanismus ausgebildet ist, beim Überführen der Abdeckung oder Klappe von ihrer Schließstellung in ihre Offenstellung die Abdeckung oder Klappe zunächst in einer insbesondere nach dem Superpositionsprinzip überlagerten Dreh- und Translationsbewegung in die Zwischenstellung zu überführen, und dann die Abdeckung oder Klappe in einer zumindest im Wesentlichen und vorzugsweise rein-rotatorischen Bewegung in die Offenstellung zu überführen.

Die mit dieser Ausgestaltung des Bewegungsmechanismus erzielbaren Vorteile liegen auf der Hand: dadurch, dass bei Betätigung eines optional dem Betätigungsmechanismus zugeordneten insbesondere elektromotorischen Antriebs ausgehend von der Schließstellung der Abdeckung oder Klappe diese zunächst in einer insbesondere nach dem Superpositionsprinzip überlagerten Dreh- und Translationsbewegung in die Zwischenstellung bewegt wird, ist sichergestellt, dass ein Dichtungsbereich zwischen der Abdeckung oder Klappe und dem Randbereich der von der Abdeckung oder Klappe abgedeckten Öffnung ungleichmäßig belastet wird. Mit anderen Worten, dadurch, dass die Abdeckung oder Klappe in einer insbesondere nach dem Superpositionsprinzip überlagerten Dreh- und Translationsbewegung in die Zwischenstellung bewegt wird, löst sich ein erster Bereich der Kante der Abdeckung oder Klappe schneller von dem Randbereich der Öffnung als ein gegenüberliegender Bereich der Abdeckung oder Klappe.

Auf diese Weise wird auf den Bereich der Abdeckung oder Klappe, der sich schneller von dem Randbereich der Öffnung löst, ein größeres Kraftmoment ausgeübt, infolgedessen sicher eine ggf. vorhandene Vereisung gelöst werden kann, ohne dass hierzu der optional vorgesehene insbesondere elektromotorische Aktuator entsprechend überdimensioniert ausgeführt sein muss.

Der Bewegungsmechanismus ist somit insbesondere ausgebildet:
(a) ausgehend von der Schließstellung der Abdeckung oder Klappe die Abdeckung oder Klappe zunächst in der insbesondere nach dem Superpositionsprinzip überlagerten Dreh- und Translationsbewegung in die Zwischenstellung zu bewegen, in einer Stellung befindet, in welcher die Abdeckung relativ zu der Schließstellung der Abdeckung um eine erste Drehachse verschwenkt ist und sich zumindest teil- oder bereichsweise - im Vergleich zu der Schließstellung - zurückversetzt in Richtung des Fahrzeuginneren befindet; und
(b) anschließend ausgehend von der Zwischenstellung der Abdeckung oder Klappe die Abdeckung oder Klappe in der zumindest im Wesentlichen und vorzugsweise rein-rotatorischen Bewegung um eine zweite Drehachse in die Offenstellung zu verschwenken, in welcher die Abdeckung oder Klappe zumindest teil- oder bereichsweise hinter der Fahrzeugkarosserie und insbesondere hinter der Fahrzeugaußenhaut angeordnet ist.

Insbesondere befindet sich die Abdeckung in der Zwischenstellung in einer zumindest teil- oder bereichsweise - im Vergleich zu der Schließstellung -in Richtung des Fahrzeuginneren zurückversetzten Stellung.

Um einen besonders kompakten Aufbau des Betätigungsmechanismus zu erzielen, ist gemäß Weiterbildungen der zuletzt genannten Ausführungsvariante des Bewegungsmechanismus vorgesehen, dass die erste Drehachse, um welche die Abdeckung oder Klappe in der insbesondere nach dem Superpositionsprinzip überlagerten Dreh- und Translationsbewegung in die Zwischenstellung bewegbar ist, mit der zweiten Drehachse übereinstimmt, um welche die Abdeckung oder Klappe ausgehend von ihrer Schließstellung in die Offenstellung verschwenkbar ist.

Insbesondere bietet es sich in diesem Zusammenhang an, dass die erste und vorzugsweise auch die zweite Drehachse mit einer Drehachse einer Antriebswelle des insbesondere optional vorgesehenen und vorzugsweise elektromotorisch ausgeführten Antriebs übereinstimmen.

Um den Innenbereich der mit der Abdeckung oder Klappe abdeckbaren Mulde vor Witterungseinflüssen und insbesondere vor Feuchtigkeit zu schützen, ist gemäß einem Aspekt der Erfindung vorgesehen, dass der Abdeckung oder Klappe eine insbesondere teil- oder bereichsweise die Abdeckung oder Klappe umlaufende Dichtung zugeordnet ist, welche ausgebildet ist, zumindest in der Schließstellung der Abdeckung oder Klappe einen Bereich zwischen der Abdeckung oder Klappe und der Fahrzeugkarosserie und insbesondere der Fahrzeugaußenhaut abzudichten.

Der Bewegungsmechanismus ist dabei insbesondere ausgebildet, bei Betätigung des Antriebs ausgehend von der Schließstellung der Abdeckung oder Klappe diese derart in der insbesondere nach dem Superpositionsprinzip überlagerten Dreh- und Translationsbewegung in die Zwischenstellung zu bewegen, dass sich die insbesondere teil- oder bereichsweise die Abdeckung oder Klappe umlaufende Dichtung in einem ersten Bereich der Dichtung schneller relativ zu der Abdeckung oder Klappe oder relativ zu der Fahrzeugkarosserie und insbesondere Fahrzeugaußenhaut bewegt als in einem insbesondere dem ersten Bereich der Dichtung gegenüberliegenden zweiten Bereich der Dichtung. Auf diese Weise wird wirkungsvoll eine Eisbrecher-Funktion realisiert.

Um in einer möglichst einfachen aber dennoch effektiven Weise den Bewegungsmechanismus des Betätigungsmechanismus zu realisieren, ist insbesondere vorgesehen, dass der Bewegungsmechanismus einen um die erste Drehachse drehbar gelagerten Hebel, insbesondere Ausdrückhebel, und einen Scharnierarm aufweist, wobei ein erster Endbereich des Scharnierarms vorzugsweise fest mit insbesondere der Rückseite der Abdeckung verbunden oder verbindbar ist, und wobei ein gegenüberliegender zweiter Endbereich des Scharnierarms gelenkig mit dem Hebel verbunden ist.

In diesem Zusammenhang bietet es sich an, dass zumindest über einen vorab festgelegten oder festlegbaren Winkelbereich der Scharnierarm über seinen zweiten Endbereich um eine dritte Drehachse relativ zu dem Hebel verschwenkbar ist, wobei die dritte Drehachse vorzugsweise parallel zu der ersten Drehachse verläuft, um den der Hebel drehbar gelagert ist.

Alternativ oder zusätzlich zu dem zuletzt genannten Aspekt ist es denkbar, dass der Hebel einen Mitnehmer aufweist, welcher ausgebildet ist, bei Bewegung des Hebels den Scharnierarm ebenfalls in Bewegung und insbesondere in Drehung zu versetzen.

Denkbar in diesem Zusammenhang ist es beispielsweise, dass der Mitnehmer ausgebildet ist, ausgehend von einer Ruheposition des Hebels, in welcher die Abdeckung in ihrer Schließstellung vorliegt, erst nach Verdrehung des Hebels um einen vorab festgelegten oder festlegbaren Winkelbereich um die erste Drehachse des Hebels in Kontakt mit dem Scharnierarm zu treten, wobei dann und bei einem weiteren Verdrehen des Hebels der Hebel zusätzlich mit dem Scharnierarm um die erste Drehachse des Hebels verschwenkt wird.

Auf diese Weise ist ohne die Verwendung eines Zahnradgetriebes der relativ komplexe Bewegungsablauf der Abdeckung in einer reproduzierbaren Weise realisierbar.

Denkbar in diesem Zusammenhang ist es insbesondere, dass nach Verdrehung des Hebels um den vorab festgelegten oder festlegbaren Winkelbereich um die erste Drehachse des Hebels die Abdeckung in ihrer Zwischenstellung vorliegt.

Grundsätzlich ist es denkbar, dass dem Bewegungsmechanismus ein Federmechanismus und/oder eine mechanische Blockierung zugeordnet ist, welche ausgebildet ist, den Scharnierarm und den Hebel zusammenzuhalten, wenn der Mitnehmer in Kontakt mit dem Scharnierarm tritt oder getreten ist.

Nachfolgend wird die Erfindung unter Bezugnahme auf die beiliegenden Zeichnungen anhand von Ausführungsbeispielen näher beschrieben.

Es zeigen:

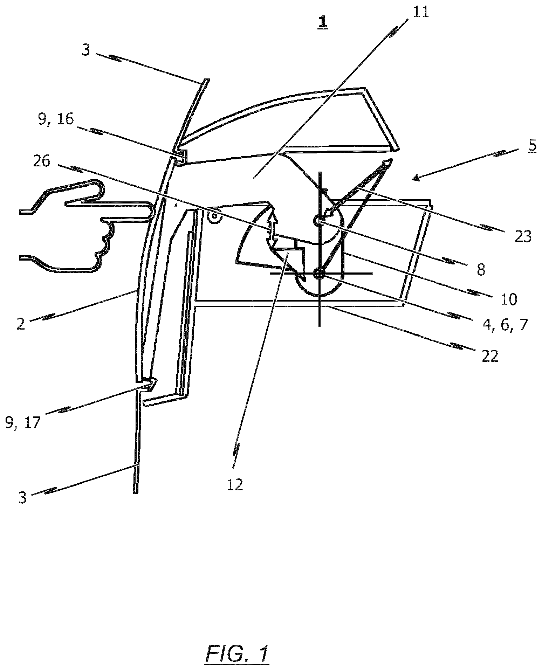

- FIG. 1: schematisch und in einer Querschnittsansicht eine exemplarische Ausführungsform des erfindungsgemäßen Betätigungsmechanismus, wobei die Abdeckung oder Klappe der Lade-, Service- oder Tankanordnung bzw. des Sensor- und insbesondere LIDAR-Systems in ihrer Schließstellung vorliegt;

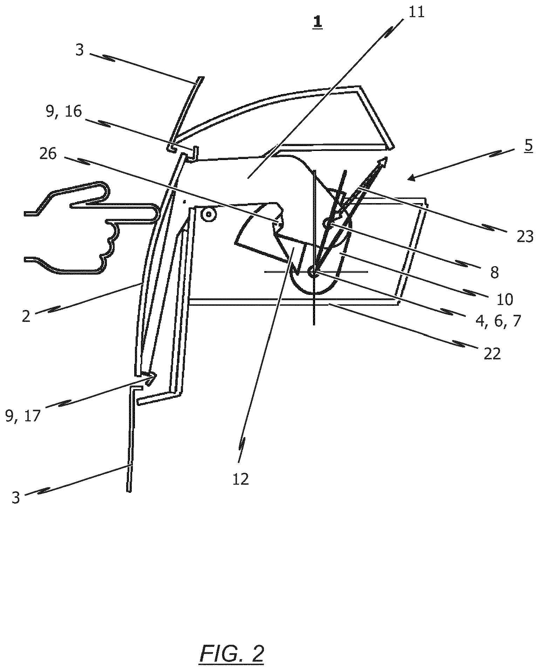

- FIG. 2: schematisch und in einer Querschnittsansicht die erste exemplarische Ausführungsform des erfindungsgemäßen Betätigungsmechanismus gemäß FIG. 1, wobei die Abdeckung oder Klappe von ihrer Schließstellung gemäß FIG. 1 in einer insbesondere nach dem Superpositionsprinzip überlagerten Dreh- und Translationsbewegung nach innen, d.h. in Richtung der Mulde der der Lade-, Service- oder Tankanordnung bzw. in die Mulde der Sensor- und insbesondere LIDAR-System-Anordnung, hinein in ihrer Zwischenstellung überführt vorliegt;

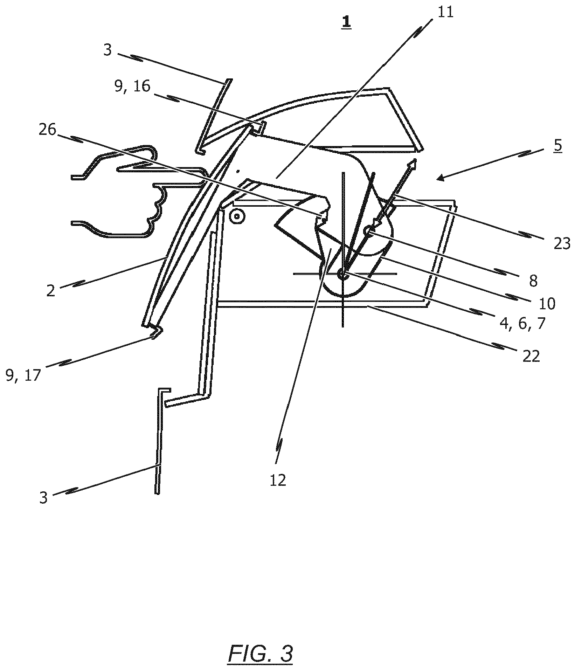

- FIG. 3: schematisch und in einer Querschnittsansicht die erste exemplarische Ausführungsform des erfindungsgemäßen Betätigungsmechanismus gemäß FIG. 1, wobei die Abdeckung oder Klappe von ihrer Zwischenstellung gemäß FIG. 2 in einer zumindest im Wesentlichen rein-rotatorischen Bewegung in ihrer Totpunktstellung überführt vorliegt;

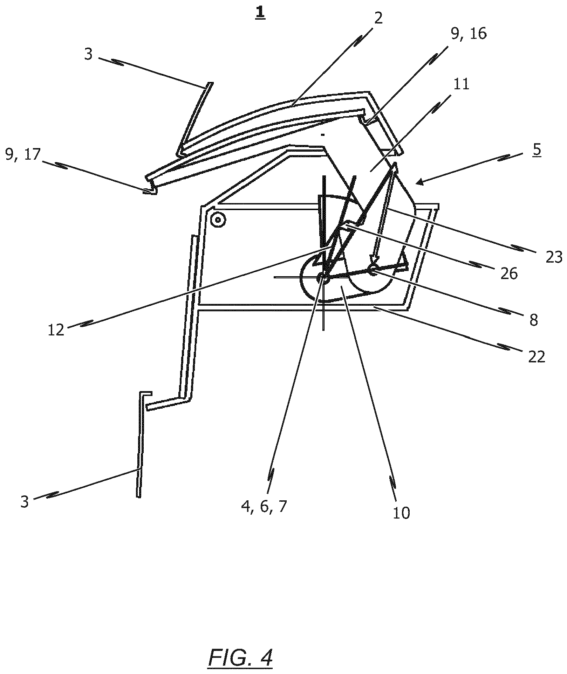

- FIG. 4: schematisch und in einer Querschnittsansicht die erste exemplarische Ausführungsform des erfindungsgemäßen Betätigungsmechanismus gemäß FIG. 1, wobei die Abdeckung oder Klappe von ihrer Totpunktstellung gemäß FIG. 3 in einer zumindest im Wesentlichen rein-rotatorischen Bewegung in ihrer Offenstellung verschwenkt vorliegt;

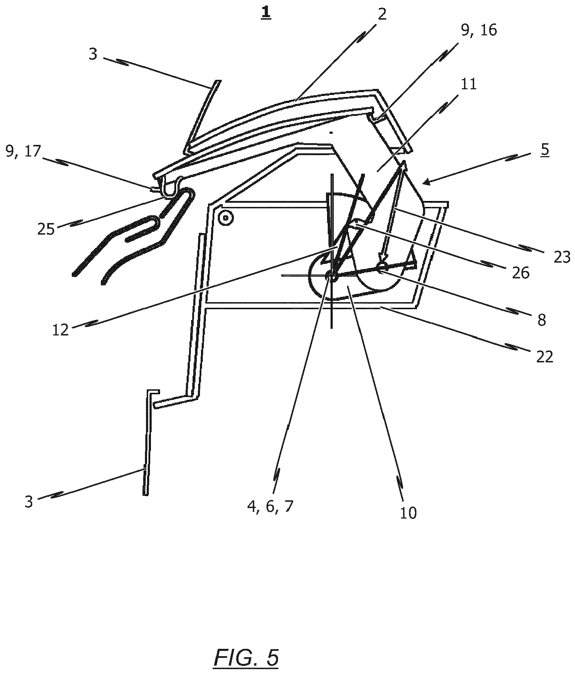

- FIG. 5: schematisch und in einer Querschnittsansicht die erste exemplarische Ausführungsform des erfindungsgemäßen Betätigungsmechanismus gemäß FIG. 1, wobei angedeutet wird, wie manuell die Abdeckung oder Klappe von ihrer Offenstellung gemäß FIG. 4 zurück in Richtung der Schließstellung der Abdeckung oder Klappe überführbar ist;

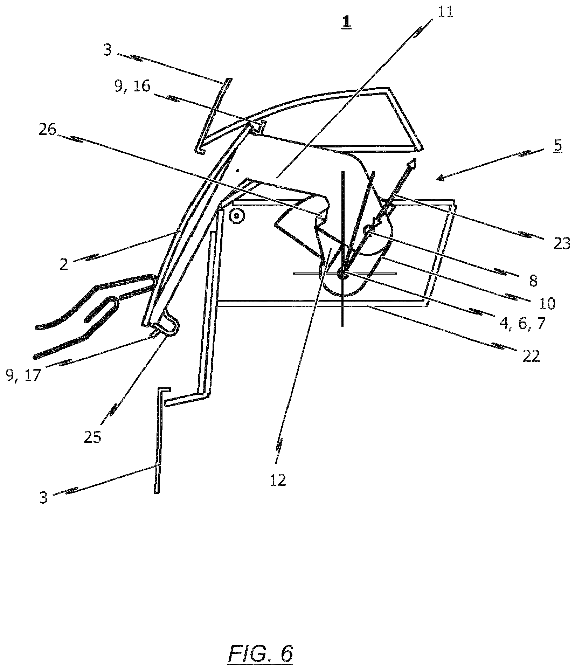

- FIG. 6: schematisch und in einer Querschnittsansicht die erste exemplarische Ausführungsform des erfindungsgemäßen Betätigungsmechanismus gemäß FIG. 1, wobei die Abdeckung oder Klappe bei ihrer Überführung von der Offenstellung gemäß FIG. 4 oder FIG. 5 in der Totpunktstellung vorliegt;

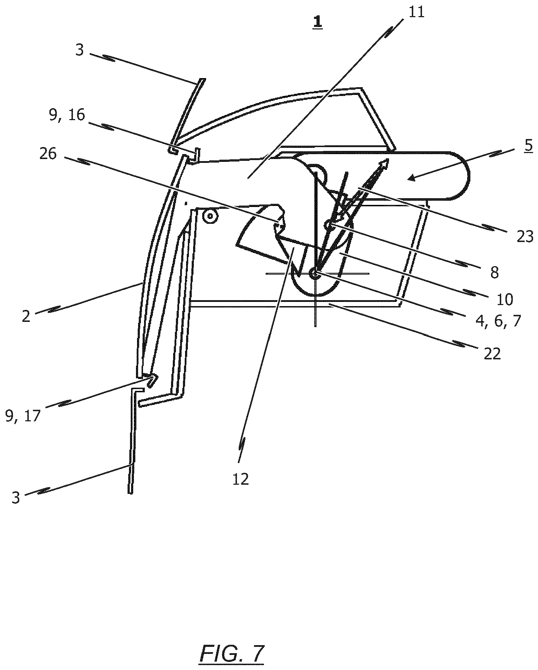

- FIG. 7: schematisch und in einer Querschnittsansicht die erste exemplarische Ausführungsform des erfindungsgemäßen Betätigungsmechanismus gemäß FIG. 1, wobei die Abdeckung oder Klappe - ausgehend von der in FIG. 6 gezeigten Totpunktstellung - im Zuge des Schließvorgangs (wieder) in der Zwischenstellung vergleichbar mit der Stellung in FIG. 2 vorliegt;

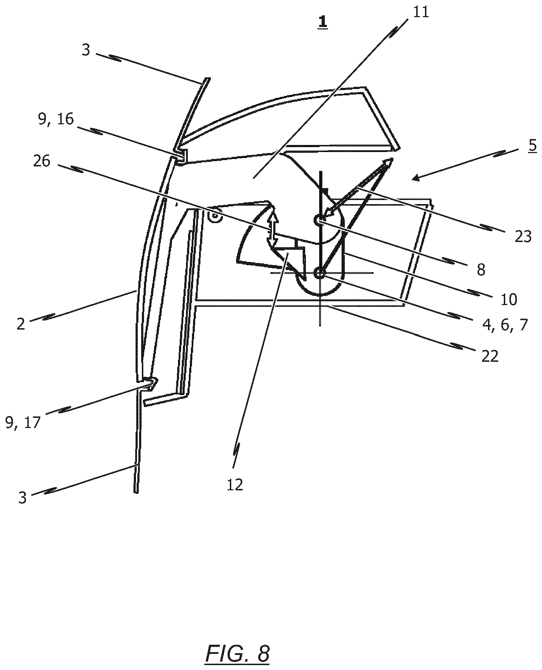

- FIG. 8: schematisch und in einer Querschnittsansicht die erste exemplarische Ausführungsform des erfindungsgemäßen Betätigungsmechanismus gemäß FIG. 1, wobei - ausgehend von der in FIG. 7 gezeigten Zwischenstellung - die Abdeckung oder Klappe wieder in ihrer Schließstellung gemäß FIG. 1 vorliegt;

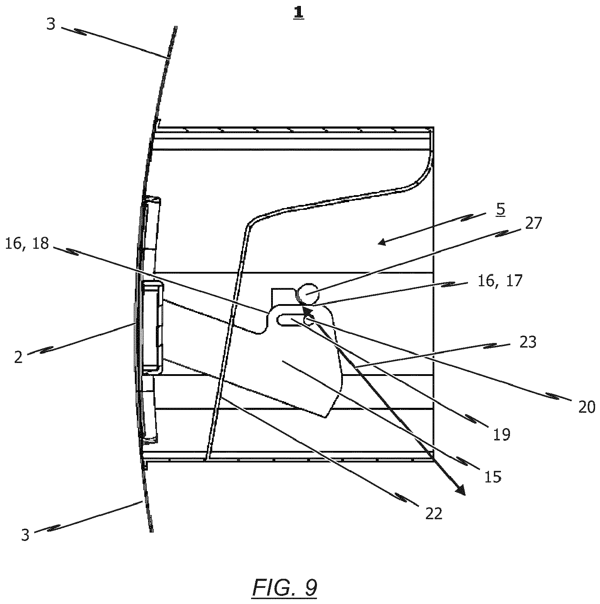

- FIG. 9: schematisch und in einer Querschnittsansicht eine weitere (zweite) exemplarische Ausführungsform des erfindungsgemäßen Betätigungsmechanismus, wobei die Abdeckung oder Klappe der Lade-, Service- oder Tankanordnung oder der Sensor- und insbesondere LIDAR-System-Anordnung, in ihrer Schließstellung vorliegt;

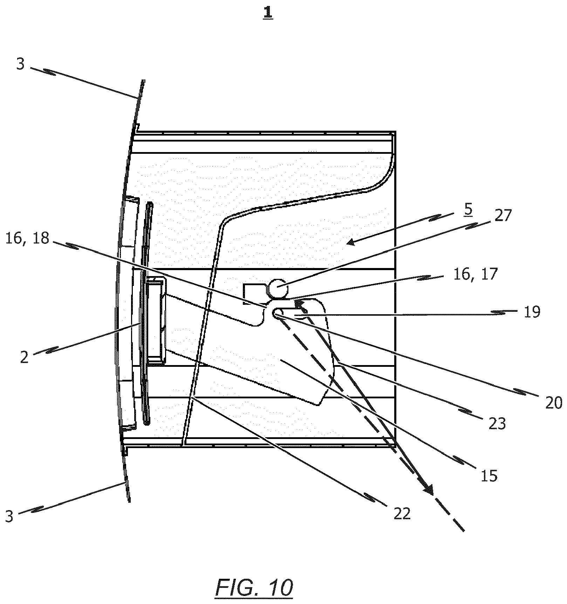

- FIG. 10: schematisch und in einer Querschnittsansicht die zweite exemplarische Ausführungsform des erfindungsgemäßen Betätigungsmechanismus gemäß FIG. 9, wobei die Abdeckung oder Klappe von ihrer Schließstellung gemäß FIG. 9 in einer Linearbewegung nach innen, d.h. in die Mulde der Lade-, Service- oder Tankanordnung oder der Sensor- und insbesondere LIDAR-System-Anordnung, hinein in ihrer Zwischenstellung überführt vorliegt;

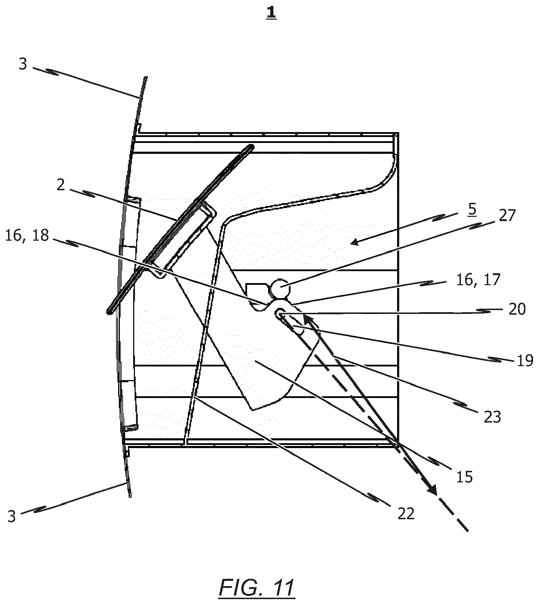

- FIG. 11: schematisch und in einer Querschnittsansicht die zweite exemplarische Ausführungsform des erfindungsgemäßen Betätigungsmechanismus gemäß FIG. 9, wobei die Abdeckung oder Klappe - ausgehend von der in FIG. 10 gezeigten Zwischenstellung - in einer Totpunktstellung vorliegt; und

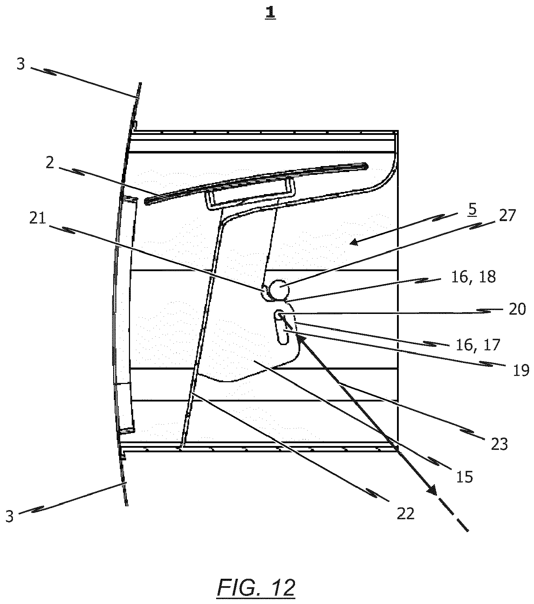

- FIG. 12: schematisch und in einer Querschnittsansicht die zweite exemplarische Ausführungsform des erfindungsgemäßen Betätigungsmechanismus gemäß FIG. 9, wobei die Abdeckung oder Klappe von ihrer Totpunktstellung gemäß FIG. 11 in einer zumindest im Wesentlichen rein-rotatorischen Bewegung in ihrer Offenstellung verschwenkt vorliegt.

Nachfolgend wird zunächst unter Bezugnahme auf die Darstellungen in FIG. 1 bis FIG. 8 eine erste exemplarische Ausführungsform des erfindungsgemäßen Betätigungsmechanismus 1 näher beschrieben.

Obgleich es grundsätzlich denkbar ist, dass der Betätigungsmechanismus 1 gemäß der ersten exemplarischen Ausführungsform nach FIG. 1 bis FIG. 8 mit einem Aktuator und insbesondere elektromotorischen Aktuator (Elektromotor) versehen ist, ist dies nicht grundsätzlich als einschränkend anzusehen.

Vielmehr eignet sich der Betätigungsmechanismus 1 auch dafür, eine Abdeckung oder Klappe 2 (wie in den Zeichnungen angedeutet) manuell, insbesondere rein manuell, von der Schließstellung der Abdeckung oder Klappe 2 gemäß FIG. 1 in die Zwischenstellung der Abdeckung bzw. Klappe 2 gemäß FIG. 2 und dann in die Totpunktstellung der Abdeckung oder Klappe 2 gemäß FIG. 3 und schließlich in die Offenstellung der Abdeckung oder Klappe 2 gemäß FIG. 4 und anschließend wieder zurück von der Offenstellung (siehe FIG. 5) in die Totpunktstellung der Abdeckung oder Klappe 2 gemäß FIG. 6 und dann in die Zwischenstellung gemäß FIG. 7 zu überführen.

Losgelöst von diesen Anmerkungen kann der Betätigungsmechanismus 1 gemäß der ersten exemplarischen Ausführungsform nach FIG. 1 bis FIG. 8 sehr wohl auch einen nicht näher gezeigten Antrieb, insbesondere in Gestalt eines Elektromotors, aufweisen, der eine entsprechende Antriebswelle aufweist.

Insbesondere weist der Betätigungsmechanismus 1 einen vorzugsweise mit der Rückseite der Abdeckung oder Klappe 2 und mit dem Antrieb wirkverbundenen Bewegungsmechanismus 5 auf.

Der Zusammenschau von FIG. 1 bis FIG. 4 ist zu entnehmen, dass bei Betätigung des Antriebs und/oder bei manueller Betätigung ausgehend von der Schließstellung der Abdeckung oder Klappe 2 gemäß FIG. 1 diese zunächst in einer insbesondere nach dem Superpositionsprinzip überlagerten Dreh- und Translationsbewegung in die Zwischenstellung gemäß FIG. 2 bewegt wird, in welcher sich die Abdeckung oder Klappe 2 in einer Stellung befindet, in welcher die Abdeckung oder Klappe 2 relativ zu der Schließstellung der Abdeckung oder Klappe 2 um eine erste Drehachse 6 verschwenkt und sich zumindest teil- oder bereichsweise hinter der Fahrzeugkarosserie und insbesondere Fahrzeugaußenhaut 3 befindet.

Bei einer weiteren Betätigung des Antriebs bzw. bei einer weiteren manuellen Betätigung wird ausgehend von der Zwischenstellung der Abdeckung oder Klappe 2 gemäß FIG. 2 diese anschließend in einer zumindest im Wesentlichen und vorzugsweise rein-rotatorischen Bewegung um eine zweite Drehachse 7 in die Offenstellung verschwenkt, in welcher die Abdeckung oder Klappe 2 zumindest teil- oder bereichsweise hinter der Fahrzeugkarosserie und insbesondere hinter der Fahrzeugaußenhaut 3 angeordnet ist.

Bei den in den Zeichnungen gezeigten Ausführungsformen ist vorgesehen, dass die erste Drehachse 6, um welche die Abdeckung oder Klappe 2 in der insbesondere nach dem Superpositionsprinzip überlagerten Dreh- und Translationsbewegung in die Zwischenstellung bewegbar ist, mit der zweiten Drehachse 7 übereinstimmt, um welche die Abdeckung oder Klappe 2 ausgehend von ihrer Zwischenstellung in die Offenstellung verschwenkbar ist. Insbesondere ist dabei vorgesehen, dass die erste und zweite Drehachse 6, 7 mit der Drehachse der Antriebswelle 3 des optional vorhandenen Antriebs übereinstimmen.

In den Zeichnungen ist ferner angedeutet, dass der Abdeckung oder Klappe 2 eine insbesondere teil- oder bereichsweise die Abdeckung oder Klappe 2 umlaufende Dichtung 9 zugeordnet ist, welche ausgebildet ist, zumindest in der Schließstellung der Abdeckung oder Klappe 2 (vgl. beispielsweise FIG. 1 oder FIG. 8) einen Bereich zwischen der Abdeckung oder Klappe 2 und der Fahrzeugkarosserie und insbesondere der Fahrzeugaußenhaut 3 abzudichten.

Der Bewegungsmechanismus 5 ist dabei ausgebildet, bei Betätigung des ggf. vorhandenen Antriebs oder bei manueller Betätigung ausgehend von der Schließstellung (vgl. beispielsweise FIG. 1) die Abdeckung oder Klappe 2 derart in der insbesondere nach dem Superpositionsprinzip überlagerten Dreh- und Translationsbewegung in die Zwischenstellung zu bewegen (vgl. FIG. 2), dass sich die insbesondere teil- oder bereichsweise die Abdeckung oder Klappe 2 umlaufende Dichtung 9 in einem ersten Bereich 16 der Dichtung 9 (hier: in einem oberen Bereich der Dichtung 9) schneller relativ zu der Abdeckung oder Klappe 2 oder zu der Fahrzeugkarosserie bewegt als in einem insbesondere dem ersten Bereich 16 der Dichtung 9 gegenüberliegenden zweiten Bereich 17 der Dichtung 9.

Bei der ersten exemplarischen Ausführungsform des in den Zeichnungen gezeigten Betätigungsmechanismus 1 ist vorgesehen, dass der Bewegungsmechanismus 5 einen um die erste Drehachse 6 drehbar gelagerten Hebel 10, insbesondere Ausdrückhebel, und einen Scharnierarm 11 aufweist, wobei ein erster Endbereich des Scharnierarms 11 vorzugsweise fest mit insbesondere der Rückseite der Abdeckung oder Klappe 2 verbunden oder verbindbar ist. Andererseits ist ein gegenüberliegender zweiter Endbereich des Scharnierarms 11 gelenkig mit dem Hebel 10 verbunden.

Hierbei ist vorgesehen, dass zumindest über einen vorab festgelegten oder festlegbaren Winkelbereich der Scharnierarm 11 über seinen zweiten Endbereich um eine dritte Drehachse 8 relativ zu dem Hebel 10 verschwenkbar ist, wobei die dritte Drehachse 8 vorzugsweise parallel zu der ersten Drehachse 6 verläuft, um den der Hebel 10 drehbar gelagert ist.

Ferner ist bei der ersten exemplarischen Ausführungsform des erfindungsgemä-ßen Betätigungsmechanismus 1 vorgesehen, dass der Hebel 10 einen Mitnehmer 12 aufweist, welcher ausgebildet ist, bei Bewegung des Hebels 10 den Scharnierarm 11 ebenfalls in Bewegung und insbesondere in Drehung zu versetzen.

Insbesondere ist der Mitnehmer 12 ausgebildet, ausgehend von einer Ruheposition des Hebels 10, in welcher die Abdeckung oder Klappe 2 in ihrer Schließstellung vorliegt (vgl. beispielsweise FIG. 1), erst nach Verdrehung des Hebels 10 um einen vorab festgelegten oder festlegbaren Winkelbereich um die erste Drehachse 6 des Hebels 10 in Kontakt mit dem Scharnierarm 11 zu treten (vgl. beispielsweise FIG. 2), wobei dann und bei einem weiteren Verdrehen des Hebels 10 der Hebel 10 zusätzlich mit dem Scharnierarm 11 um die erste Drehachse 6 des Hebels 10 verschwenkt wird (vgl. beispielsweise FIG. 3 und FIG. 4).

Die erste exemplarische Ausführungsform des erfindungsgemäßen Betätigungsmechanismus 1 zeichnet sich insbesondere auch dadurch aus, dass der Betätigungsmechanismus 1 einen Federmechanismus aufweist, welcher dem Bewegungsmechanismus 5 zugeordnet oder Teil des Bewegungsmechanismus 5 ist.

Der Federmechanismus ist ausgebildet, beim Überführen der Abdeckung oder Klappe 2 von ihrer Offenstellung (vgl. FIG. 4) in ihre Schließstellung (vgl. FIG. 1) und insbesondere beim Überführen der Abdeckung oder Klappe 2 von ihrer Offenstellung (vgl. FIG. 4) in ihre Zwischenstellung (vgl. FIG. 2) eine erste Kraftkomponente auf den Bewegungsmechanismus 5 auszuüben, welche die Überführung der Abdeckung oder Klappe 2 in ihre Schließstellung soweit zumindest unterstützt.

Im Einzelnen ist dabei bei der ersten exemplarischen Ausführungsform des erfindungsgemäßen Betätigungsmechanismus 1 vorgesehen, dass der Federmechanismus ausgebildet ist, beim Überführen der Abdeckung oder Klappe 2 von ihrer Offenstellung in ihre Schließstellung und insbesondere beim Überführen der Abdeckung oder Klappe 2 von ihrer Offenstellung gemäß FIG. 4 in ihre Zwischenstellung gemäß FIG. 2 eine erste Kraftkomponente auf den Bewegungsmechanismus 5 auszuüben, welche die Überführung der Abdeckung oder Klappe 2 in ihre Schließstellung soweit zumindest unterstützt, bis sich die Abdeckung oder Klappe 2 in ihrer Totpunktstellung gemäß FIG. 3 zwischen der Zwischenstellung gemäß FIG. 2 und der Offenstellung gemäß FIG. 4 befindet.

Dabei ist bei der ersten exemplarischen Ausführungsform des erfindungsgemäßen Betätigungsmechanismus 1 vorgesehen, dass der Federmechanismus als Totpunktfeder- und insbesondere Übertotpunktfeder-Hebelmechanismus ausgeführt ist oder Teil eines solchen Totpunktfeder- und insbesondere Übertotpunktfeder-Hebelmechanismus ist. Dabei wird nach Überwindung der Totpunktstellung gemäß FIG. 3 eine zweite Kraftkomponente auf den Bewegungsmechanismus 5 ausgeübt, welche die Überführung der Abdeckung oder Klappe 2 von der Totpunktstellung gemäß FIG. 3 in die Schließstellung gemäß FIG. 1 zumindest unterstützt.

Im Einzelnen ist bei der ersten exemplarischen Ausführungsform des erfindungsgemäßen Betätigungsmechanismus 1 vorgesehen, dass der Federmechanismus eine Totpunkt- und insbesondere Übertotpunktfeder 23 aufweist, welche an einem Hebel bzw. Hebelbereich des Bewegungsmechanismus 5 einerseits und an einem hinsichtlich des Hebels bzw. Hebelbereichs des Bewegungsmechanismus 5 ortsfesten Punkt andererseits angebracht ist, wobei der Hebel bzw. Hebelbereich des Bewegungsmechanismus 5 um einen Drehpunkt drehbar gelagert ist, und wobei die Totpunkt- und insbesondere Übertotpunktfeder 23 in leicht versetzter Stellung zu dem Drehpunkt 4, 6, 7 des Hebels oder Hebelbereichs an dem Hebel oder Hebelbereich angebracht ist.

Bei der ersten exemplarischen Ausführungsform ist dabei die Totpunkt- und insbesondere Übertotpunktfeder 23 als Druckfeder ausgeführt.

Wie es insbesondere der Darstellung in FIG. 1 und FIG. 2 entnommen werden kann, ist der Betätigungsmechanismus 1 gemäß der ersten exemplarischen Ausführungsform derart ausgebildet, dass durch insbesondere manuelle Kraftausübung auf die Abdeckung oder Klappe 2 die Abdeckung oder Klappe 2 von ihrer Schließstellung (vgl. FIG. 1) in ihre Zwischenstellung (vgl. FIG. 2) überführbar ist.

Insbesondere ist dabei der Federmechanismus ausgebildet, dass die Abdeckung oder Klappe 2 entgegen der Vorspannkraft des Federmechanismus in ihre Totpunktstellung gemäß FIG. 3 überführt wird und anschließend und insbesondere nach Überwindung der Totpunktstellung durch manuelle Kraftausübung auf die Abdeckung oder Klappe 2 die Abdeckung oder Klappe 2 in ihre Offenstellung gemäß FIG. 4 überführt wird.

Wie es insbesondere beispielsweise der Darstellung in FIG. 5 entnommen werden kann, ist bei dem Betätigungsmechanismus 1 gemäß der ersten exemplarischen Ausführungsform insbesondere vorgesehen, dass die Abdeckung oder Klappe 2 einen insbesondere an der Rückseite der Abdeckung oder Klappe 2 angeordneten und insbesondere manuell betätigbaren oder ergreifbaren Betätigungsbereich 25 aufweist (vgl. FIG. 5 und FIG. 6).

Der Betätigungsbereich 25 ist ausgebildet, damit dieser in der Offenstellung der Abdeckung oder Klappe 2 insbesondere manuell betätigbar und insbesondere greifbar ist, wie es in FIG. 5 schematisch angedeutet ist.

Auf diese Weise ist insbesondere in Richtung einer von dem Federmechanismus auf den Bewegungsmechanismus 5 bzw. auf die Abdeckung oder Klappe 2 ausgeübten Vorspannkraft die Abdeckung oder Klappe 2 von ihrer Offenstellung gemäß FIG. 5 in die Totpunktstellung gemäß FIG. 6 überführbar.

Anschließend kann die Abdeckung oder Klappe 2 - wie in FIG. 6 angedeutet - ebenfalls durch manuelle Kraftausübung auf die Abdeckung oder Klappe 2 insbesondere von außen in die Zwischenstellung gemäß FIG. 7 wieder überführt werden.

Vorzugsweise ist dem Bewegungsmechanismus 3 ein Federmechanismus 26 und/oder eine mechanische Blockierung zugeordnet, welche ausgebildet ist, den Scharnierarm 11 und den Hebel 10 zusammenzuhalten, wenn der Mitnehmer 12 in Kontakt mit dem Scharnierarm 11 tritt oder getreten ist.

Nachfolgend wird unter Bezugnahme auf die Darstellungen in FIG. 9 bis FIG. 12 eine alternative Ausführungsform des erfindungsgemäßen Betätigungsmechanismus 1 beschrieben.

Der Betätigungsmechanismus 1 gemäß der weiteren (zweiten) exemplarischen Ausführungsform der Erfindung zeichnet sich insbesondere dadurch aus, dass der mit der Rückseite der Abdeckung oder Klappe 2 wirkverbundene Bewegungsmechanismus 5 ausgebildet ist, beim Überführen der Abdeckung oder Klappe 2 von ihrer Schließstellung gemäß FIG. 9 zunächst in einer Linearbewegung und insbesondere in einer reinen Linearbewegung die Abdeckung oder Klappe 2 in die in FIG. 10 gezeigte Zwischenstellung zu überführen.

Anschließend wird die Abdeckung oder Klappe 2 in die in FIG. 12 gezeigte Offenstellung im Zuge einer insbesondere rein-rotatorischen Bewegung überführt.

Die zweite exemplarische Ausführungsform des erfindungsgemäßen Betätigungsmechanismus 1 zeichnet sich insbesondere auch dadurch aus, dass der insbesondere mit der Rückseite der Abdeckung oder Klappe 2 wirkverbundene Bewegungsmechanismus 5 einen Führungsmechanismus aufweist, welcher ausgebildet ist, beim Überführen der Abdeckung oder Klappe 2 von ihrer Schließstellung (vgl. FIG. 9) in ihre Zwischenstellung gemäß FIG. 10 eine entsprechende Linearbewegung der Abdeckung oder Klappe 2 relativ zu der Fahrzeugkarosserie und insbesondere relativ zu der Fahrzeugaußenhaut 3 zu realisieren.

Anschließend wird mit Hilfe des Bewegungsmechanismus 5 die Abdeckung oder Klappe 2 von ihrer Zwischenstellung gemäß FIG. 10 in einer vorzugsweise rein-rotatorischen Bewegung relativ zu der Fahrzeugkarosserie und insbesondere relativ zu der Fahrzeugaußenhaut 3 in die in FIG. 11 gezeigte Totpunktstellung bzw. anschließend in die in FIG. 12 gezeigte Offenstellung überführt.

Bei der zweiten exemplarischen Ausführungsform des erfindungsgemäßen Betätigungsmechanismus 1 weist der Bewegungsmechanismus 5 einen Hebelarm 15 auf.

Der Hebelarm 15 ist an einem ersten Ende mit der Abdeckung bzw. Klappe 2 verbunden. Es sei angemerkt, dass der Darstellung in FIG. 9 nur ein einzelner Hebelarm 15 zu entnehmen ist.

Jedoch ist es grundsätzlich denkbar, dass der Bewegungsmechanismus 5 zwei oder mehrere vorzugsweise im Wesentlichen identische Hebelarme aufweist, welche an insbesondere gegenüberliegenden Seiten der Abdeckung oder Klappe 2 angebracht sind. Diese Hebelarme können dabei über ein entsprechendes Synchronisationselement miteinander und mit der Abdeckung oder Klappe 2 wirkverbunden sein.

Der bei der zweiten exemplarischen Ausführungsform des erfindungsgemäßen Betätigungsmechanismus 1 verwendete Hebelarm 15 weist eine Antriebsfläche 16 auf.

Die Antriebsfläche 16 ist an einem zweiten Ende des Hebelarms 15 vorgesehen, welches dem ersten Ende im Wesentlichen gegenüberliegt. Die Antriebsfläche 16 ist auf einer Außenoberfläche des Hebelarms 15 angeordnet.

Die Antriebsfläche 16 steht mit einem Antriebsrad 27, beispielsweise mit einem Zahnrad, in Kontakt.

Das Antriebsrad 27 wird durch eine in FIG. 9 bis FIG. 12 nicht dargestellte Antriebswelle eines Antriebs, insbesondere eines elektromotorischen Antriebs (Elektromotor), angetrieben. Das Antriebsrad 27 kann insbesondere im und entgegen des Uhrzeigersinns rotiert werden.

Der Hebelarm 15 weist ferner eine Führungsnut 19 auf, welche als Langloch ausgebildet ist. In der Führungsnut 19 ist ein eine Schwenkachse 20 definierender Schwenkbolzen aufgenommen.

In der in FIG. 9 gezeigten Schließstellung der Abdeckung oder Klappe 2 ist die Schwenkachse 20 an einem ersten Ende der Führungsnut 19 angeordnet. Durch die Führungsnut 19 ist der Hebelarm 15 translatorisch gegenüber der Schwenkachse 20 bewegbar.

Der Betätigungsmechanismus 1 ist insbesondere innerhalb, d.h. hinter der Fahrzeugkarosserie/Fahrzeugaußenhaut 3 aufgenommen.

An der Innenseite der Fahrzeugkarosserie/Fahrzeugaußenhaut 3 ist eine Mulde 22 vorgesehen, welche beispielsweise zur Aufnahme von Lade- bzw. Tankmodulen (z.B. Ladestecker oder Tanköffnungen) oder zur Aufnahme einer Sensoranordnung, insbesondere einer LIDAR-Sensor-Anordnung, dient.

Die Mulde 22 unterteilt den Innenbereich der Fahrzeugaußenhaut 3 in einen außenseitigen Bereich und in einen innenseitigen Bereich. Der außenseitige Bereich ist bei geöffneter Abdeckung oder Klappe 2 (vgl. beispielsweise FIG. 12) von der Fahrzeugaußenseite schwer zugänglich. Der Innenbereich ist nicht von außen zugänglich, unabhängig davon, ob die Abdeckung oder Klappe 2 geöffnet oder geschlossen ist.

Wie es insbesondere ferner der Darstellung in FIG. 9 entnommen werden kann, befindet sich der insbesondere elektromotorische Antrieb, die Schwenkachse 20 und die Antriebsfläche 16 hinter der Mulde 22, d.h. im innenseitigen Bereich. Lediglich ein vorderer Teil des Hebelarms 15, welcher über das erste Ende mit der Abdeckung oder Klappe 2 verbunden ist, erstreckt sich durch entsprechende Öffnungen der Mulde 22, beispielsweise durch Langlöcher der Mulde 22. Somit sind die Antriebsteile des Betätigungsmechanismus 1 durch die Mulde 22 vor Witterungseinflüssen geschützt.

Die Antriebsfläche 16 weist einen linearen bzw. geradlinig verlaufenden Bereich 17 auf. Der lineare bzw. geradlinige Bereich 17 erstreckt sich im Einzelnen parallel zu der Führungsnut 19.

Der lineare bzw. geradlinig verlaufende Bereich 17 steht in der in FIG. 9 gezeigten Schließstellung der Abdeckung oder Klappe 2 in Kontakt mit dem Antriebsrad 27. Durch eine Bewegung des Antriebsrads 27 entgegen dem Uhrzeigersinn kommt es dementsprechend zu einer linearen Verschiebung des Hebelarms 15 und damit der Abdeckung oder Klappe 2 in die Fahrzeugaußenhaut 3 hinein.

Die Länge des linearen bzw. geradlinig verlaufenden Bereichs 17 ist insbesondere auf die Länge der Führungsnut 19 angepasst. Insbesondere ist der lineare bzw. geradlinige Bereich 17 im Wesentlichen gleichlang wie oder länger als die Länge der Führungsnut 19.

Bei Rotation des Antriebsrads 27 entgegen des Uhrzeigersinns in FIG. 9 wird der Hebelarm 15 gegenüber der Schwenkachse 20 translatorisch nach innen bewegt.

Ein Ende der translatorischen Schiebebewegung des Hebelarms 15 durch das Antriebsrad 27 ist in FIG. 10 gezeigt.

In FIG. 10 ist der Hebelarm 15 und damit die Abdeckung oder Klappe 2 soweit in die Fahrzeugaußenhaut 3 3 hineinverschoben worden, dass der Schwenkarm/Hebelarm 15 ein dem ersten Ende gegenüberliegendes zweites Ende der Führungsnut 19 erreicht.

In dieser Stellung ist ein weiteres lineares bzw. geradliniges Verschieben der Abdeckung oder Klappe 2 nach innen nicht mehr möglich.

Die Antriebsfläche 16 weist einen bogenförmigen Bereich 18 auf. Der bogenförmige Bereich 18 ist unmittelbar angrenzend an dem linearen, d.h. geradlinig verlaufenden Bereich 17 angeordnet.

Der bogenförmige Bereich 18 gemäß der in FIG. 9 bis FIG. 12 gezeigten zweiten exemplarischen Ausführungsform des erfindungsgemäßen Betätigungsmechanismus 1 überspannt vorzugsweise einen Winkel von 90°.

In der in FIG. 10 schematisch gezeigten Endstellung der Linearbewegung der Abdeckung oder Klappe 2 kommt das Antriebsrad 27 in Kontakt mit dem bogenförmigen Bereich 18 der Antriebsfläche 16. Anders ausgedrückt wird die Rotationsenergie der Antriebswelle ab der in FIG. 10 gezeigten Stellung über das Antriebsrad 27 auf den bogenförmigen Bereich 18 des Hebelarms 15 übertragen.

Bei einer weiteren Rotation des Antriebsrads 27 entgegen des Uhrzeigersinns wird der bogenförmige Bereich 18 durch das Antriebsrad 27 überfahren. Hierdurch wird die Schwenkbewegung des Hebelarms 15 erzielt.

Insbesondere wird der Hebelarm 15 um die Schwenkachse 20 verschwenkt, wie dies beispielsweise in FIG. 11 gezeigt ist. Mit anderen Worten, der bogenförmige Bereich 18 wird während des Verschwenkens zwischen der Schwenkachse 20 und dem Antriebsrad 27 hindurchbewegt.

Bei einer weiteren Bewegung des Antriebsrads 27 entgegen des Uhrzeigersinns wird der Hebelarm 15 weiter verschwenkt, bis dieser die in FIG. 12 gezeigte Offenstellung der Abdeckung oder Klappe 2 erreicht.

In der Offenstellung der Abdeckung oder Klappe 2 gemäß FIG. 12 kann das Antriebsrad 27 mit einem Endanschlag 21 des Hebelarms 15 in Wirkeingriff stehen (vgl. FIG. 12). Somit wird ein weiteres Verschwenken in Öffnungsrichtung verhindert, so dass die Offenstellung der Abdeckung oder Klappe 2 wiederholbar erreicht werden kann.

Der Endanschlag 21 kann durch einen weiteren bogenförmigen Bereich 18 ausgebildet sein, welcher jedoch nicht als Antriebsfläche 16 dient. Der beispielsweise bogenförmig ausgebildete Endanschlag 21 kann konvex ausgebildet sein, während der bogenförmige Bereich 18 der Antriebsfläche 16 konkav ausgebildet ist. Mit anderen Worten, der bogenförmige Bereich 18 kann mit dem bogenförmigen Endanschlag 21 eine im Wesentlichen S-Form ausbilden.

Durch eine Bewegung des Antriebsrads 27 im Uhrzeigersinn kann der Hebelarm 15 und somit die Abdeckung oder Klappe 2 von der in FIG. 12 gezeigten Offenstellung in die in FIG. 9 gezeigte Schließstellung wieder zurück überführt werden. Dies erfolgt analog zu der zuvor beschriebenen Öffnungsbewegung, wobei hier jedoch zunächst eine Verschwenkbewegung und dann eine Schiebebewegung des Hebelarms 15 und damit der Abdeckung oder Klappe 2 erfolgt, bis letztendlich die Schließstellung gemäß FIG. 9 erreicht ist.

Vorzugsweise kommt bei der zweiten exemplarischen Ausführungsform des erfindungsgemäßen Betätigungsmechanismus 1 ein Federmechanismus zum Einsatz, welcher dem Bewegungsmechanismus 5 zugeordnet oder Teil des Bewegungsmechanismus 5 ist.

Wie in FIG. 9 bis FIG. 12 schematisch angedeutet, kann der (optional vorgesehene) Federmechanismus eine insbesondere als Totpunktfeder 23 ausgeführte Feder, insbesondere Druckfeder aufweisen.

Die insbesondere als Druckfeder ausgeführte Feder, welche - wie ausgeführt - insbesondere eine Totpunktfeder 23 ist, ist an einem Hebelbereich des Bewegungsmechanismus 5 einerseits und an einem hinsichtlich des Hebelbereichs 15 des Bewegungsmechanismus 5 ortsfesten Punkt andererseits angebracht. Der Hebelbereich des Bewegungsmechanismus 5 ist um die Drehachse 2 drehbar gelagert, wie vorstehend beschrieben, wobei die insbesondere als Totpunktfeder 23 in insbesondere leicht versetzter Stellung zu dem Drehpunkt 20 des Hebelbereichs 15 an dem Hebelbereich 15 angeordnet ist.

Die mit dem bei der zweiten exemplarischen Ausführungsform gemäß FIG. 9 bis FIG. 12 optional vorgesehenen Federmechanismus erzielbaren technischen Effekte wurden bereits im Zusammenhang mit der ersten exemplarischen Ausführungsform gemäß FIG. 1 bis FIG. 8 beschrieben und werden hierin nicht noch einmal wiederholt.

Die Erfindung ist nicht auf die in den Zeichnungen gezeigten exemplarischen Ausführungsformen beschränkt, sondern ergibt sich in einer Zusammenschau sämtlicher hierin offenbarter Merkmale.

### Bezugszeichenliste

- 1: Betätigungsmechanismus
- 2: Abdeckung/Klappe
- 3: Fahrzeug karosserie/Fahrzeugaußenhaut
- 4: Antriebswelle
- 5: Bewegungsmechanismus
- 6: erste Drehachse
- 7: zweite Drehachse
- 8: dritte Drehachse
- 9: Dichtung
- 10: Hebel/Ausdrückhebel
- 11: Scharnierarm
- 12: Mitnehmer
- 13: erster Bereich der Dichtung
- 14: zweiter Bereich der Dichtung
- 15: Hebelarm/Hebelbereich (zweite exemplarische Ausführungsform)
- 16: Antriebsfläche (zweite exemplarische Ausführungsform)
- 17: erster (geradlinig verlaufender) Bereich der Antriebsfläche (zweite exemplarische Ausführungsform)
- 18: zweiter (bogenförmiger) Bereich der Antriebsfläche 16 (zweite exemplarische Ausführungsform)
- 19: Führungsnut (zweite exemplarische Ausführungsform)
- 20: Schwenkachse (zweite exemplarische Ausführungsform)
- 21: Endanschlag (zweite exemplarische Ausführungsform)
- 22: Mulde
- 23: Totpunkt-/Übertotpunktfeder
- 25: Betätigungsbereich
- 26: Federmechanismus
- 27: Antriebsrad

## Patentansprüche

1. Betätigungsmechanismus (1) zum Betätigen einer Abdeckung oder Klappe (2) eines Fahrzeugs, insbesondere einer Abdeckung oder Klappe (2) in Gestalt einer Lade-, Service- oder Tankklappe eines Fahrzeugs oder in Gestalt einer Abdeckung oder Klappe (2) zur Sensor- und insbesondere LIDAR-System-Abdeckung eines Fahrzeugs, wobei die Abdeckung oder Klappe (2) insbesondere manuell reversibel zwischen einer Schließstellung, in welcher die Abdeckung oder Klappe (2) insbesondere bündig und vorzugsweise strakbündig mit einer Fahrzeugkarosserie und insbesondere Fahrzeugaußenhaut (3) angeordnet ist, und einer Offenstellung bewegbar ist, in welcher die Abdeckung oder Klappe (2) zumindest teil- oder bereichsweise hinter der Fahrzeugkarosserie und insbesondere Fahrzeugaußenhaut (3) angeordnet ist, wobei der Betätigungsmechanismus (1) einen insbesondere mit der Rückseite der Abdeckung oder Klappe (2) wirkverbundenen Bewegungsmechanismus (3), insbesondere in Gestalt eines Gelenkmechanismus oder in Gestalt eines Führungsmechanismus insbesondere Kurvenscheibenführungsmechanismus aufweist, welcher ausgebildet ist, beim Überführen der Abdeckung oder Klappe (2) von ihrer Schließstellung in ihre Offenstellung die Abdeckung oder Klappe (2) zunächst in eine Zwischenstellung zu überführen, in welcher sich die Abdeckung oder Klappe (2) zumindest teil- oder bereichsweise hinter der Fahrzeugkarosserie und insbesondere Fahrzeugaußenhaut (3) befindet, und die Abdeckung oder Klappe (2) dann in einer zumindest im Wesentlichen und vorzugsweise rein-rotatorischen Bewegung in ihre Offenstellung zu überführen,
**dadurch gekennzeichnet, dass**
der Betätigungsmechanismus (1) ferner einen Federmechanismus aufweist, welcher insbesondere dem Bewegungsmechanismus (3) zugeordnet oder Teil des Bewegungsmechanismus (3) ist, wobei der Federmechanismus ausgebildet ist:
- beim Überführen der Abdeckung oder Klappe (2) von ihrer Schließstellung in ihre Offenstellung und insbesondere beim Überführen der Abdeckung oder Klappe (2) von ihrer Zwischenstellung in ihre Offenstellung eine erste Kraftkomponente auf den Bewegungsmechanismus (3) auszuüben, welche die Überführung der Abdeckung oder Klappe (2) in ihre Offenstellung zumindest unterstützt; oder
- beim Überführen der Abdeckung oder Klappe (2) von ihrer Offenstellungstellung in ihre Schließstellung und insbesondere beim Überführen der Abdeckung oder Klappe (2) von ihrer Zwischenstellung in ihre Schließstellungstellung eine erste Kraftkomponente auf den Bewegungsmechanismus (3) auszuüben, welche die Überführung der Abdeckung oder Klappe (2) in ihre Schließstellung zumindest unterstützt.

2. Betätigungsmechanismus (1) nach Anspruch 1,
wobei der Federmechanismus ausgebildet ist:
- beim Überführen der Abdeckung oder Klappe (2) von ihrer Schließstellung in ihre Offenstellung und insbesondere beim Überführen der Abdeckung oder Klappe (2) von ihrer Zwischenstellung in ihre Offenstellung eine erste Kraftkomponente auf den Bewegungsmechanismus (3) auszuüben, welche die Überführung der Abdeckung oder Klappe (2) in ihre Offenstellung soweit zumindest unterstützt, bis sich die Abdeckung oder Klappe (2) in einer Totpunktstellung zwischen der Zwischenstellung und der Offenstellung befindet, wobei die Totpunktstellung der Abdeckung oder Klappe (2) insbesondere eine bistabile Stellung der Abdeckung oder Klappe (2) darstellt; oder
- beim Überführen der Abdeckung oder Klappe (2) von ihrer Offenstellungstellung in ihre Schließstellung und insbesondere beim Überführen der Abdeckung oder Klappe (2) von ihrer Zwischenstellung in ihre Schließstellungstellung eine erste Kraftkomponente auf den Bewegungsmechanismus (3) auszuüben, welche die Überführung der Abdeckung oder Klappe (2) in ihre Schließstellung soweit zumindest unterstützt, bis sich die Abdeckung oder Klappe (2) in einer Totpunktstellung zwischen der Offenstellung und der Schließstellung befindet, wobei die Totpunktstellung der Abdeckung oder Klappe (2) insbesondere eine bistabile Stellung der Abdeckung oder Klappe (2) darstellt.

3. Betätigungsmechanismus (1) nach Anspruch 2,
wobei der Federmechanismus als Totpunktfeder- und insbesondere Übertotpunktfeder-Hebelmechanismus ausgeführt ist oder Teil eines Totpunktfeder- und insbesondere Übertotpunktfeder-Hebelmechanismus ist, wobei der Totpunktfeder- und insbesondere Übertotpunktfeder-Hebelmechanismus ausgebildet ist:
- nach Überwindung der Totpunktstellung in Richtung Offenstellung der Abdeckung oder Klappe (2) eine zweite Kraftkomponente auf den Bewegungsmechanismus (3) auszuüben, welche die Überführung der Abdeckung oder Klappe (2) von der Totpunktstellung in die Offenstellung zumindest unterstützt; oder
- nach Überwindung der Totpunktstellung in Richtung Schließstellung der Abdeckung oder Klappe (2) eine zweite Kraftkomponente auf den Bewegungsmechanismus (3) auszuüben, welche die Überführung der Abdeckung oder Klappe (2) von der Totpunktstellung in die Schließstellung zumindest unterstützt.

4. Betätigungsmechanismus (1) nach einem der Ansprüche 1 bis 3, wobei der Federmechanismus mindestens eine Totpunkt- und insbesondere Übertotpunktfeder (23) aufweist, welche an einem Hebel oder an einem Hebelbereich des Bewegungsmechanismus (3) einerseits und an einem hinsichtlich des Hebels oder des Hebelbereichs des Bewegungsmechanismus (3) ortsfesten Punkt andererseits angebracht ist, wobei der Hebel oder Hebelbereich des Bewegungsmechanismus (3) um einen Drehpunkt drehbar gelagert ist, und wobei vorzugsweise die mindestens eine Totpunkt- und insbesondere Übertotpunktfeder (23) in insbesondere leicht versetzter Stellung zu dem Drehpunkt des Hebels oder Hebelbereichs an dem Hebel oder Hebelbereich angebracht ist, wobei die mindestens eine Totpunkt- und insbesondere Übertotpunktfeder (23) vorzugsweise als Druckfeder ausgeführt ist.

5. Betätigungsmechanismus (1) nach einem der Ansprüche 1 bis 4 in Kombination mit Anspruch 2, wobei der Betätigungsmechanismus (1) derart ausgebildet ist, dass durch insbesondere manuelle Kraftausübung auf die Abdeckung oder Klappe (2) die Abdeckung oder Klappe (2) von ihrer Offenstellung in ihre Zwischenstellung überführbar ist, wobei der Federmechanismus ausgebildet ist, dann die Abdeckung oder Klappe (2) vorzugsweise selbsttätig in ihre Totpunktstellung zu überführen und anschließend und insbesondere nach Überwindung der Totpunktstellung durch insbesondere manuelle Kraftausübung auf die Abdeckung oder Klappe (2) die Abdeckung oder Klappe (2) vorzugsweise selbsttätig in ihre Schließstellung zu überführen.

6. Betätigungsmechanismus (1) nach einem der Ansprüche 1 bis 5, wobei die Abdeckung oder Klappe (2) einen insbesondere an der Rückseite der Abdeckung oder Klappe (2) angeordneten und insbesondere manuell betätigbaren oder ergreifbaren Betätigungsbereich (25) aufweist, welcher derart ausgebildet ist, dass der Betätigungsbereich (25) zumindest in der Offenstellung der Abdeckung oder Klappe (2) insbesondere manuell derart betätigbar oder greifbar ist, dass insbesondere in Richtung einer von dem Federmechanismus auf den Bewegungsmechanismus (3) und/oder auf die Abdeckung oder Klappe (2) ausgeübten Vorspannkraft die Abdeckung oder Klappe (2) insbesondere manuell von ihrer Offenstellung in eine Totpunktstellung der Abdeckung oder Klappe (2) und/oder in die Zwischenstellung die Abdeckung oder Klappe (2) überführbar ist.

7. Betätigungsmechanismus (1) nach einem der Ansprüche 1 bis 6, wobei der insbesondere mit der Rückseite der Abdeckung oder Klappe (2) wirkverbundene Bewegungsmechanismus (3) ausgebildet ist, beim Überführen der Abdeckung oder Klappe (2) von ihrer Schließstellung in ihre Offenstellung die Abdeckung oder Klappe (2) zunächst in einer Linearbewegung und insbesondere in einer reinen Linearbewegung in die Zwischenstellung zu überführen, und dann die Abdeckung oder Klappe (2) in einer zumindest im Wesentlichen und vorzugsweise rein-rotatorischen Bewegung in die Offenstellung zu überführen.

8. Betätigungsmechanismus (1) nach einem der Ansprüche 1 bis 7 und insbesondere nach Anspruch 7, wobei der insbesondere mit der Rückseite der Abdeckung oder Klappe (2) wirkverbundene Bewegungsmechanismus (3) einen Führungsmechanismus, insbesondere Kulissenführungsmechanismus und/oder Kurvenscheibenmechanismus, aufweist, welcher ausgebildet ist, beim Überführen der Abdeckung oder Klappe (2) von ihrer Schließstellung in ihre Zwischenstellung eine entsprechende Linearbewegung der Abdeckung oder Klappe (2) relativ zu der Fahrzeugkarosserie und insbesondere relativ zu der Fahrzeugaußenhaut (3) zu realisieren, und welcher ferner ausgebildet ist, beim Überführen der Abdeckung oder Klappe (2) von ihrer Zwischenstellung in ihre Offenstellung eine zumindest im Wesentlichen und vorzugsweise rein-rotatorische Bewegung der Abdeckung oder Klappe (2) relativ zu der Fahrzeugkarosserie und insbesondere relativ zu der Fahrzeugaußenhaut (3) zu realisieren.

9. Betätigungsmechanismus (1) nach einem der Ansprüche 1 bis 6, wobei der insbesondere mit der Rückseite der Abdeckung oder Klappe (2) wirkverbundene Bewegungsmechanismus (3) ausgebildet ist, beim Überführen der Abdeckung oder Klappe (2) von ihrer Schließstellung in ihre Offenstellung die Abdeckung oder Klappe (2) zunächst in einer insbesondere nach dem Superpositionsprinzip überlagerten Dreh- und Translationsbewegung in die Zwischenstellung zu überführen, und dann die Abdeckung oder Klappe (2) in einer zumindest im Wesentlichen und vorzugsweise rein-rotatorischen Bewegung in die Offenstellung zu überführen, wobei der Bewegungsmechanismus (3) insbesondere ausgebildet ist:
(a) ausgehend von der Schließstellung der Abdeckung oder Klappe (2) die Abdeckung oder Klappe (2) zunächst in der insbesondere nach dem Superpositionsprinzip überlagerten Dreh- und Translationsbewegung in die Zwischenstellung zu bewegen, in in welcher sich die Abdeckung (2) in einer Stellung befindet, in welcher die Abdeckung (2) relativ zu der Schließstellung der Abdeckung (2) um eine erste Drehachse (6) verschwenkt ist und sich zumindest teil- oder bereichsweise - im Vergleich zu der Schließstellung - zurückversetzt in Richtung des Fahrzeuginneren befindet; und
(b) anschließend ausgehend von der Zwischenstellung der Abdeckung oder Klappe (2) die Abdeckung oder Klappe (2) in der zumindest im Wesentlichen und vorzugsweise rein-rotatorischen Bewegung um eine zweite Drehachse (7) in die Offenstellung zu verschwenken, in welcher die Abdeckung oder Klappe (2) zumindest teil- oder bereichsweise hinter der Fahrzeugkarosserie und insbesondere hinter der Fahrzeugaußenhaut (3) angeordnet ist,
wobei die erste Drehachse (6), um welche die Abdeckung oder Klappe (2) in der insbesondere nach dem Superpositionsprinzip überlagerten Dreh- und Translationsbewegung in die Zwischenstellung bewegbar ist, vorzugsweise mit der zweiten Drehachse (7) übereinstimmt, um welche die Abdeckung oder Klappe (2) ausgehend von ihrer Schließstellung in die Offenstellung verschwenkbar ist.

10. Betätigungsmechanismus (1) nach Anspruch 9,
wobei der Abdeckung oder Klappe (2) eine insbesondere teil- oder bereichsweise die Abdeckung oder Klappe (2) umlaufende Dichtung (9) zugeordnet ist, welche ausgebildet ist, zumindest in der Schließstellung der Abdeckung oder Klappe (2) einen Bereich zwischen der Abdeckung oder Klappe (2) und der Fahrzeugkarosserie und insbesondere der Fahrzeugaußenhaut (3) abzudichten, wobei der Bewegungsmechanismus (3) ausgebildet ist, beim Überführen der Abdeckung oder Klappe (2) ausgehend von der Schließstellung der Abdeckung oder Klappe (2) die Abdeckung oder Klappe (2) derart in der insbesondere nach dem Superpositionsprinzip überlagerten Dreh- und Translationsbewegung in die Zwischenstellung zu bewegen, dass sich die insbesondere teil- oder bereichsweise die Abdeckung oder Klappe (2) umlaufende Dichtung (9) in einem ersten Bereich (16) der Dichtung (9) schneller relativ zu der Abdeckung oder Klappe (2) oder relativ zu der Fahrzeugkarosserie und insbesondere Fahrzeugaußenhaut (3) bewegt als in einem insbesondere dem ersten Bereich (16) der Dichtung (9) gegenüberliegenden zweiten Bereich (17) der Dichtung (9).

11. Betätigungsmechanismus (1) nach Anspruch 9 oder 10,
wobei der Bewegungsmechanismus (3) einen um die erste Drehachse (6) drehbar gelagerten Hebel (10), insbesondere Ausdrückhebel, und einen Scharnierarm (11) aufweist, wobei ein erster Endbereich des Scharnierarms (11) vorzugsweise fest mit insbesondere der Rückseite der Abdeckung oder Klappe (2) verbunden oder verbindbar ist, und wobei ein gegenüberliegender zweiter Endbereich des Scharnierarms (11) gelenkig mit dem Hebel (10) verbunden ist, wobei zumindest über einen vorab festgelegten oder festlegbaren Winkelbereich der Scharnierarm (11) vorzugsweise über seinen zweiten Endbereich um eine dritte Drehachse (8) relativ zu dem Hebel (10) verschwenkbar ist, wobei die dritte Drehachse (8) vorzugsweise parallel zu der ersten Drehachse (6) verläuft, um den der Hebel (10) drehbar gelagert ist.

12. Betätigungsmechanismus (1) nach Anspruch 11,
wobei der Hebel (10) einen Mitnehmer (12) aufweist, welcher ausgebildet ist, bei Bewegung des Hebels (10) den Scharnierarm (11) ebenfalls in Bewegung und insbesondere in Drehung zu versetzen, wobei der Mitnehmer (12) vorzugsweise ausgebildet ist, ausgehend von einer Ruheposition des Hebels (10), in welcher die Abdeckung oder Klappe (2) in ihrer Schließstellung vorliegt, erst nach Verdrehung des Hebels (10) um einen vorab festgelegten oder festlegbaren Winkelbereich um die erste Drehachse (6) des Hebels (10) in Kontakt mit dem Scharnierarm (11) zu treten, wobei dann und bei einem weiteren Verdrehen des Hebels (10) der Hebel (10) zusätzlich mit dem Scharnierarm (11) um die erste Drehachse (6) des Hebels (10) verschwenkt wird, wobei nach Verdrehung des Hebels (10) um den vorab festgelegten oder festlegbaren Winkelbereich um die erste Drehachse (6) des Hebels (10) die Abdeckung vorzugsweise in ihrer Zwischenstellung vorliegt.

13. Betätigungsmechanismus (1) nach Anspruch 12,
wobei dem Bewegungsmechanismus (3) ein Federmechanismus (26) und/oder eine mechanische Blockierung zugeordnet ist, welche ausgebildet ist, den Scharnierarm (11) und den Hebel (10) zusammenzuhalten, wenn der Mitnehmer (12) in Kontakt mit dem Scharnierarm (11) tritt oder getreten ist.

14. Betätigungsmechanismus (1) nach einem der Ansprüche 1 bis 13, wobei der Betätigungsmechanismus (1) ferner einen insbesondere elektromotorischen Antrieb aufweist, und wobei der insbesondere mit der Rückseite der Abdeckung oder Klappe (2) wirkverbundene Bewegungsmechanismus (3) ferner mit dem insbesondere elektromotorischen Antrieb und insbesondere einer Antriebswelle hiervon wirkverbunden ist.

15. Anordnung, insbesondere Sensor-, vorzugsweise LIDAR-System-Anordnung, oder Lade-, Service- oder Tankanordnung für Fahrzeuge, wobei die Anordnung Folgendes aufweist:
- eine Mulde, insbesondere Sensor-, insbesondere LIDAR-System-Mulde, oder Lade-, Service- oder Tankmulde;
- eine Abdeckung oder Klappe (2) zum Abdecken der Mulde, wobei die Abdeckung oder Klappe (2) reversibel zwischen einer Schließstellung, in welcher die Abdeckung oder Klappe (2) bündig mit einer Fahrzeugaußenhaut (3) angeordnet ist, und einer Offenstellung, in welcher die Abdeckung oder Klappe (2) hinter der Außenhaut angeordnet ist, bewegbar und insbesondere verschwenkbar ist; und
- einen Betätigungsmechanismus (1) nach einem der Ansprüche 1 bis 14,
wobei der Betätigungsmechanismus (1) vorzugsweise einen insbesondere elektromotorischen Antrieb mit einer Antriebswelle aufweist, wobei der insbesondere elektromotorische Antrieb vorzugsweise hinter der Mulde angeordnet ist.
